(19) Europäisches Patentamt
European Patent Office
Office européen des brevets

(11) **EP 4 415 283 A1**

(12) **EUROPEAN PATENT APPLICATION**

(43) Date of publication:
**14.08.2024   Bulletin 2024/33**

(21) Application number: **23155668.9**

(22) Date of filing: **08.02.2023**

(51) International Patent Classification (IPC):
**H04B 7/185** (2006.01)   **G01S 7/00** (2006.01)
**G01S 13/90** (2006.01)

(52) Cooperative Patent Classification (CPC):
**H04B 7/18547; G01S 13/90;** H04B 7/18521

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Iceye Oy**
  **02150 Espoo (FI)**
• **Iceye Polska Sp. z.o.o.**
  **00-687 Warszawa (PL)**

(72) Inventors:
• **BALAS, Jakub**
  **02150 Espoo (FI)**
• **MAYERES, Jeremy**
  **02150 Espoo (FI)**
• **LENFANT, Ian**
  **00-687 Warszawa (PL)**

(74) Representative: **Forresters IP LLP**
**Skygarden**
**Erika-Mann-Straße 11**
**80636 München (DE)**

Remarks:
Amended claims under Rule 137(2) EPC for publication

(54) **METHODS AND SYSTEMS FOR ASSIGNING TASKS TO A NETWORK OF SATELLITES**

(57)    One or more computer processors receive one or more tasks and, for each task, one or more opportunities are identified. Each opportunity corresponds to a satellite from a network of satellites potentially performing the task. For each opportunity, a scheduling score is generated. The scheduling score is based on one or more task constraints including one or more of the following constraints on the task associated with the opportunity corresponding to the scheduling score: a priority assigned to the task; a duration of time before the satellite corresponding to the opportunity is able to perform the task; and an availability of a future downlink. Based on each scheduling score, at least one of the one or more tasks is assigned to the satellite corresponding to an opportunity identified for the at least one task.

**FIG. 15**

**Description**

**Field**

The present disclosure relates to satellite networks and in particular to methods and systems for assigning tasks to a satellite network.

**Background**

When a satellite network operator receives a task, such as an image acquisition request, the request must be transmitted (e.g. uplinked) to a particular satellite in the network. A given acquisition request will typically identify an area on the Earth that is to be imaged. Therefore, depending on each satellite's orbit, a given satellite may take more or less time to find itself in a position such that it may perform the acquisition. Added to this is the fact that each task may include additional constraints that must be taken into account, such as a desired time of acquisition and the resources available to perform the task.

If there is a relatively low number of satellites in the fleet, deciding which task to allocate to which satellite may not be particularly burdensome. However, as the fleet of satellites expands, it becomes more and more impractical for a human operator to rapidly and efficiently manage and schedule acquisitions, downlinks, and any other tasks across the whole fleet.

**Summary**

According to a first aspect of the disclosure, there is provided a method of assigning tasks to a network of satellites, wherein the method is performed by one or more computer processors and comprises: receiving one or more tasks; for each task: (a) identifying one or more opportunities, wherein each opportunity corresponds to a satellite from the network of satellites potentially performing the task; and (b) generating, for each opportunity, a scheduling score based on one or more task constraints including one or more of the following constraints on the task associated with the opportunity corresponding to the scheduling score: a priority assigned to the task; a duration of time before the satellite corresponding to the opportunity is able to perform the task; and an availability of a future downlink; and (c) assigning, based on each scheduling score, at least one of the one or more tasks to the satellite corresponding to an opportunity identified for the at least one task.

The one or more tasks may include a first task and a second task. Generating the scheduling score may comprise: generating a first scheduling score for an opportunity identified for the first task; and generating a second scheduling score for an opportunity identified for the second task, wherein the first and second scheduling scores are indicative that the first task is to be performed before the second task. Assigning the at least one task may comprise: assigning the first task to a first satellite, wherein the first satellite corresponds to the opportunity identified for the first task; and assigning the second task to the first satellite or to a second satellite, wherein the second satellite corresponds to the opportunity identified for the second task, wherein, in response to assigning the first task to the first satellite and the second task to the first satellite or the second satellite, the first satellite is scheduled to perform the first task before the first satellite or the second satellite is scheduled to perform the second task.

The first satellite and the second satellite may be the same satellite.

Identifying the one or more opportunities may comprise: determining one or more second task constraints relating to the task; and identifying the one or more opportunities based on the one or more second task constraints.

The one or more second task constraints may include one or more of the following constraints: a duration of the task; and a point in time by which the task must be completed.

At least one of the one or more received tasks may be an image acquisition. The one or more first task constraints may include one or more of the following constraints: an imaging geometry of the image acquisition; and an area of interest to be imaged.

At least one of the one or more received tasks may be an image acquisition.

Identifying the one or more opportunities may comprise: determining one or more satellite constraints relating to each satellite of the network of satellites; and identifying the one or more opportunities based on the one or more satellite constraints.

Determining the one or more satellite constraints relating to each satellite may comprise one or more of: obtaining a predicted orbit of each satellite; determining one or more imaging geometries relating to at least one imaging instrument of each satellite; and determining one or more parameters relating to a power availability of each satellite.

The method may further comprise uplinking an instruction to the satellite to which the assigned task has been assigned so as to cause the satellite to perform the assigned task.

The future downlink availability may comprise a duration of time between performance of the task and downlinking of data obtained as a result of performance of the task.

Generating the scheduling score may comprise generating the scheduling score based on the availability of the future downlink

Generating the scheduling score may be further based the seniority of the task. A task for which a longer period of time has elapsed since the task was received may be prioritized over a task for which a shorter period of time has elapsed since the task was received.

Generating the scheduling score may comprise: generating the scheduling score based on each of: the priority assigned to the task; the duration of time before the satellite corresponding to the opportunity is able to perform the task; and the seniority of the task, and the priority assigned to the task may be weighted more heavily than the duration of time before the satellite corresponding to the opportunity is able to perform the task which may be weighted more heavily than the seniority of the task.

Generating the scheduling score may be based the seniority of the task, and a task for which a longer period of time has elapsed since the task was received may be prioritized over a task for which a shorter period of time has elapsed since the task was received.

Generating the scheduling score may comprise: generating, for each opportunity, an initial score; and generating, for each opportunity, the scheduling score by optimizing each initial score based on one or more optimization constraints.

Generating the scheduling score by optimizing each initial score may comprise generating the scheduling score by linearly optimizing each initial score based on the one or more optimization constraints.

The one or more optimization constraints may include one or more of the following constraints: a minimum amount of time must separate a given satellite performing any two consecutive tasks assigned to the satellite; a given satellite cannot spend more than a maximum amount of time performing any task assigned to the satellite; a given satellite cannot spend, during a complete orbit of the satellite, more than a maximum amount of time performing one or more tasks assigned to the satellite; and a give task cannot be assigned to more than one satellite.

Identifying the one or more opportunities may comprise: identifying one or more initial opportunities; and filtering the one or more initial opportunities based on one or more requirements.

The one or more requirements may include a requirement that an opportunity cannot be identified for a satellite that is scheduled to perform a task within a preset time window running from a current point in time to a future point in time.

The preset time window may be based on: a minimum amount of time required for steps (a), (b), and (c) to be performed; and after the minimum amount of time has elapsed, an amount of time before the satellite is next scheduled to pass over a ground station.

Each satellite may be a synthetic aperture radar (SAR) satellite.

The method may further comprise: receiving a further task during one or more of steps (a), (b), and (c); and preventing the further task from being included in steps (a), (b), and (c).

The method may further comprise, prior to receiving the one or more tasks: for each task in a set of tasks, determining whether the task is locked; and if the task is locked, preventing the task from being included in steps (a), (b), and (c)

Determining whether the task is locked may comprise determining whether the task is scheduled to be executed within a preset time window running from a current point in time to a future point in time.

Generating the scheduling score may comprise performing constraint programming based one or more constraints.

Generating the scheduling score may comprise using linear programming by formulating the one or more task constraints as linear constraints.

The method may further comprise, prior to identifying the one or more opportunities: for at least one task of the one or more tasks, generating one or more updated opportunities, each updated opportunity corresponding to a satellite from the network of satellites potentially performing the task; and storing each updated opportunity in an opportunity cache; and identifying the one or more opportunities comprises extracting at least one updated opportunity from the opportunity cache.

According to a further aspect of the disclosure, there is provided a non-transitory computer-readable medium having stored thereon computer program code configured, when executed by one or more processors, to cause the one or more processors to perform a method of scheduling tasks for a network of satellites, the method comprising: receiving one or more tasks; for each task: identifying one or more opportunities, wherein each opportunity corresponds to a satellite from the network of satellites potentially performing the task; and generating, for each opportunity, a scheduling score based on one or more task constraints including one or more of the following constraints on the task associated with the opportunity corresponding to the scheduling score: a priority assigned to the task; a duration of time before the satellite corresponding to the opportunity is able to perform the task; and an availability of a future downlink; and assigning, based on each scheduling score, at least one of the one or more tasks to the satellite corresponding to an opportunity identified for the at least one task

According to a further aspect of the disclosure, there is provided a system comprising: a network of satellites; one or more ground stations; and a computer-implemented scheduling device configured to: receive one or more tasks; for each task: identify one or more opportunities, wherein each opportunity corresponds to a satellite from the network of satellites potentially performing the task; and generate, for each opportunity, a scheduling score based on one or more task constraints including one or more of the following constraints on the task associated with the opportunity corresponding to the scheduling score: a priority assigned to the task; a duration of time before the satellite corresponding to the opportunity is able to perform the task; and an availability of a future downlink; assign, based on each scheduling score, at least one of the one or more tasks to the satellite corresponding to an opportunity identified for the at least one task; and uplink an instruction to the satellite to which the assigned task has been assigned so as to cause the satellite to perform the assigned task.

This summary does not necessarily describe the entire scope of all aspects. Other aspects, features and advantages will be apparent to those of ordinary skill in the art upon review of the following description of specific embodiments.

**Brief Description of the Drawings**

Embodiments of the disclosure will now be described in detail in conjunction with the accompanying drawings of which:

FIG. 1 is a perspective view of the Earth, a satellite, and a ground station;

FIG. 2 is a map of the Earth showing the coverage of one satellite in 24 hours;

FIG. 3 is a schematic diagram of the Earth, an example satellite, and a system for managing a network of satellites;

FIG. 4 is a map of the Earth showing the coverage of 18 satellites in 3 hours;

FIG. 5 is a map of the Earth showing the coverage of 18 satellites in 24 hours;

FIG. 6 is a schematic diagram of a schedule calculation module of the above system, a satellite database, and a channel database;

FIG. 7 is a schematic diagram of an order for an image of a location;

FIG. 8A is a schematic diagram showing details of the above schedule calculation module;

FIG. 8B is a pair of tables showing acquisition opportunities to acquire an image of Tokyo in scenarios having 1 and 18 Earth observation satellites, respectively;

FIG. 9 is a schematic diagram showing details of the above satellite database;

FIG. 10 is a schematic diagram showing details of the above channel database;

FIG. 11 is a schematic diagram showing schedule information to be uploaded to a network of satellites;

FIG. 12 is a flow diagram showing a method of generating updated schedules for a network of satellites;

FIG. 13 is a flow diagram showing an example implementation of the above method of generating updated schedules for a network of satellites;

FIG. 14 depicts a block diagram of a computer system that may be used to assign tasks to a network of satellites;

FIG. 15 is a flow diagram of a method of assigning tasks to a network of satellites, according to an embodiment of the disclosure;

FIG. 16 shows different red zones for different satellites, based on estimated passes for each satellite, according to an embodiment of the disclosure;

FIG. 17 shows a flow diagram of a method of processing tasks, according to an embodiment of the disclosure; and

FIG. 18 depicts a system for capturing synthetic aperture radar images.

**Detailed Description**

The present disclosure seeks to provide methods and systems for assigning tasks to a network of satellites. While various embodiments of the disclosure are described below, the disclosure is not limited to these embodiments, and variations of these embodiments may well fall within the scope of the disclosure which is to be limited only by the appended claims.

Generally, according to embodiments of the disclosure, there are described computer-implemented methods in which one or more tasks are received. Each task may be, for example, an image acquisition request that identifies an area of the Earth that is to be imaged. For each task, one or more opportunities are identified. Each opportunity corresponds to a satellite from the network of satellites potentially performing the task. For example, it may be determined that certain satellites are incapable of executing the task within the constraints defined in the task, and therefore no opportunities would be identified for such satellites. Any satellite that may be able to perform the task within the constraints defined in the task, as well as within constrains specific to the satellite, may have a corresponding opportunity associated with the satellite.

For each opportunity, a scheduling score is generated. Generating the scheduling score may comprise generating, for each opportunity, an initial score, and then generating, for each opportunity, the scheduling score by optimizing each initial score based on one or more optimization constraints. Based on each scheduling score, at least one of the one or more tasks is assigned to the satellite corresponding to an opportunity identified for the at least one task. Assigning the tasks in this manner may comprise generating a set of one or more activities and then transmitting the set of activities to the satellite. Each activity may have an associated execution time that indicates the point in time at which the satellite is to execute the activity. The activities may include, for example, performing the task, such as the image acquisition, and then downlinking the acquired image.

For example, according to some embodiments, a request for an image acquisition (or simply "acquisition") is added to a database. The request comprises, among other data, the location of the desired acquisition (Area of Interest - AoI) and the desired time of the acquisition. The request is also assigned a priority, for example based on business value. For instance, the customer making the request may agree to pay more for the priority of the request to be increased. The request may additionally include the type of acquisition that is to be made.

At a regular interval, tasks are fetched from the database. For each task, data from an Orbit Determination service is used to determine the time at which one or more satellites of the fleet will be passing over (the "overpass time") the AoI. For each satellite that will be passing over the AoI, if the satellite is not already scheduled to perform a task at the overpass time, or if the satellite is scheduled to perform a lower-priority task at the overpass time, then the overpass time is stored and referred to as an opportunity.

Each opportunity is then assigned a score based, for example, on the amount of time between the overpass time and the desired time of acquisition, the capacity and capability of the satellite, and also future downlink availability for the satellite, for example how soon after acquisition the satellite will be in a position to downlink the acquired image to a ground station. The future downlink availability could also be based on other factors such as an indication of whether a downlink is available within a certain specified amount of time, the cost of the downlink, the speed of the downlink, or others.

The highest-scoring opportunity is selected, and events or activities are created in that satellite's schedule in order to action the acquisition and downlink. The schedule is then transferred to the satellite, replacing any previous version assigned to the satellite.

According to some embodiments, at each pass of a satellite over a ground station, a schedule is uploaded to the satellite. This schedule contains time-stamped commands for the satellite to perform. For example, the satellite may be tasked to perform an image acquisition (or simply "acquisition"), downlink previously acquired images to a ground station, or perform one or more manoeuvres.

Other constraints may be taken into consideration when determining to which satellite a given task is to be assigned. For example, as explained above, a priority (such as a business-related priority) may be assigned to the task. In certain cases, tasks will not be assigned to a given satellite if, for example, the satellite is incapable of performing the task because of, for example, scheduled maintenance, the technical capabilities of the satellite, or other reservations of the satellite's time that cannot be rescheduled.

Advantageously, tasks that are received (for example, from a customer of the network operator) are automatically scheduled and assigned to appropriate satellites within the fleet. The downlink of any image data that is acquired may also be scheduled in a way that minimises the delay between acquisition and downlink. For example, the satellite's overpass time relative to one or more ground stations, as well as the ground stations' capacities and any business rules surrounding their use, may be determined. Based on this data, one or more downlink activities may be generated and assigned to the satellite after the acquisition has been executed.

Generally, the methods and systems described herein may allow for timely planning, capture, and delivery of acquisitions, and in particular acquisitions by Synthetic Aperture Radar (SAR) satellites. In a relatively short period of time, it may be possible to determine which satellite will be passing over the AoI at the desired time, and if the satellite is capable of handling the acquisition. The task may then be transformed into one or more activities for a specific satellite and scheduled on that satellite. The process may allow for more efficient usage of the fleet, and more effective prioritisation of requests.

Generally, although not exclusively, embodiments of the disclosure may relate to methods and systems for assigning tasks to a network of Synthetic Aperture Radar (SAR) satellites. SAR images are a type of image created by transmitting radar signals, receiving the reflected and scattered radar return signals, and processing the return signals in order to form an image. This is in contrast to optical imagery, a passive technology wherein images are captured by receiving light reflected or originating from an object. SAR technology, on the other hand, is an active rather than a passive technology since it relies on transmitting a radar signal rather than relying on sunlight or other light sources. A significant advantage of SAR technology over optical imagery is that SAR technology can image at night as well as through clouds and other adverse weather conditions. However, forming an image using SAR technology is generally more complex and generally requires significant signal processing of the returned echoes in order to decode them.

More particularly, SAR images are typically acquired from an aerial transmitter and receiver, such as a transmitter that comprises part of an airplane or a satellite. In conventional radar, the resolution of an image generated by measuring reflections of a radar signal is directly proportional to the wavelength of the radar signal and, consequently, the length of the antenna used to transmit and receive the radar signal. This means that the length of the antenna that would be required to capture high resolution images using conventional radar is often impractical, particularly for airborne use.

In contrast, SAR images are captured using a "synthetic aperture". A shorter and consequently more practical antenna is used on a moving platform to make a series of measurements of reflected radar signals, and those measurements are combined to simulate a much larger antenna. Consequently, the resolution of a SAR image corresponds to the resolution of a conventional radar image captured using an antenna much larger than the one used to capture the SAR image.

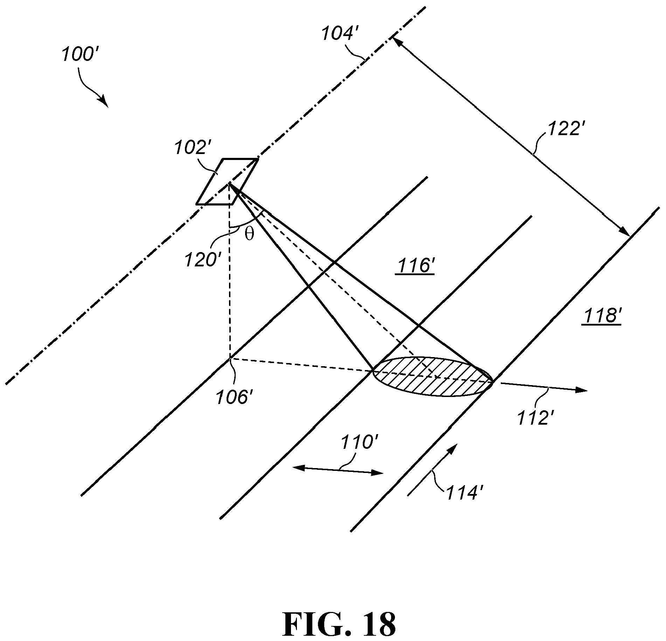

Scheduling tasks for a network of SAR satellites can also be quite different from scheduling tasks for optical satellites, and as such satellite scheduling techniques developed primarily for optical satellites cannot be applied directly for scheduling a network of SAR satellites. In addition to the differences mentioned above, optical satellites typically image straight down, whereas SAR satellites cannot image straight down due to the overly strong radar reflection from the nadir (the point on the ground directly underneath the satellite). Instead, SAR satellites are typically "side-looking", meaning that they image at an angle to the side within a certain range of "look angles", as described in more detail below with reference to FIG. 18. The look angle can for example be from 15 degrees to 45 degrees. The look angle can be looking to the left or the right (some SAR satellites can be rotated to do either). Look angle and the direction (left or right) are parameters comprised within the imaging geometry. While this can increase the potential coverage of the SAR satellite compared to optical satellites that are constrained to pointing straight down, it also makes the scheduling of the satellites more complex and requires for example at least a different and more capable opportunity generator than what could be used for an optical satellite.

Different constraints may also factor into the scoring for SAR satellites as compared to optical satellites. Although SAR satellites have some advantages over optical satellites that simplify scheduling, for example being able image through clouds and during both day and night so that weather does not have to be taken into account, they have other constraints that can make it more complex to schedule. For example, due to the power requirements of sending and receiving SAR signals (particularly sending), the imaging time of small SAR satellites during a particular orbit can be limited, for example to 90 seconds or 120 seconds during a 90-minute orbit. These differences mean that prior art systems designed mainly for optical and other non-SAR satellites cannot automatically be applied to networks of SAR satellites.

Referring first to FIG. 18, there is shown a system 100' for capturing synthetic aperture radar ("SAR") images. More particularly, FIG. 18 shows schematically how an aerial antenna 102' is used to capture SAR images. Antenna 102' may be satellite- or airplane-mounted, for example. Antenna 102' travels along a flight path 104', and directly below antenna 102' is the nadir 106'. Antenna 102' emits a radar signal 108' at a look angle 120' that illuminates a swath 110' on the ground, which is offset from nadir 106'. Antenna 102' measures the radial line of sight distance between antenna 102' and the surface along a slant range 122'. FIG. 18 also shows a range direction 112' and an azimuth direction 114', with range direction 112' extending perpendicularly away from flight path 104', and azimuth direction 114' extending parallel to flight path 104'. In respect of range direction 112', the swath 110' is between points along range direction 112' referred to as the near range 116' and the far range 118'.

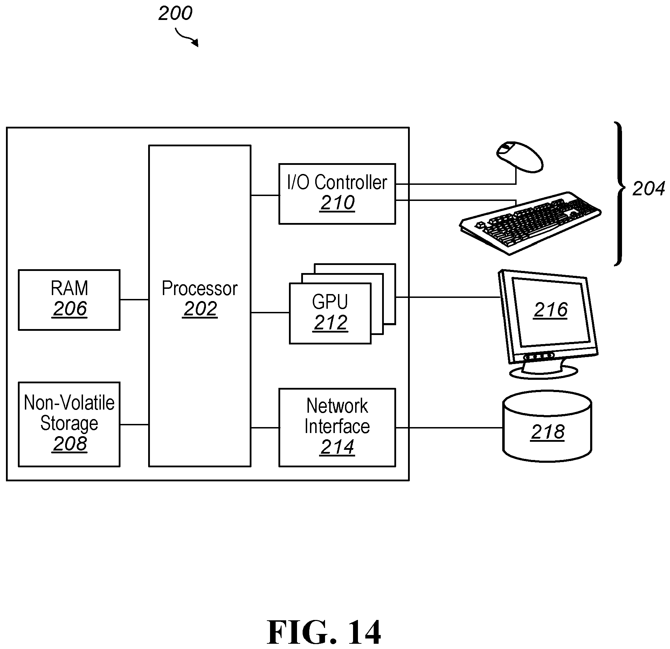

Referring now to FIG. 14, there is depicted an example embodiment of a computer system 200 that may be used to perform a method for assigning tasks to a network of satellites, as described in further detail below. Computer system 200 comprises a processor 202 that controls computer system's 200 overall operation. Processor 202 is communicatively coupled to and controls several subsystems. These subsystems comprise an input/output ("I/O") controller 210, which is communicatively coupled to user input devices 204. User input devices 204 may comprise, for example, any one or more of a keyboard, mouse, touch screen, and microphone. The subsystems further comprise random access memory ("RAM") 206 which stores computer program code for execution at runtime by processor 202; non-volatile storage 208 which stores the computer program code executed by RAM 206 at runtime; graphical processing units ("GPU") 212 which control a display 216; and a network interface 214 which facilitates network communications with a database 218. Non-volatile storage 208 has stored on it computer program code that is loaded into RAM 206 at runtime and that is executable by processor 202. When the computer program code is executed by processor 202, processor 202 causes computer system 200 to implement a method assigning tasks to a network of satellites, such as described further below. Additionally or alternatively, multiple of computer systems 200 may be networked together and collectively perform that method using distributed computing.

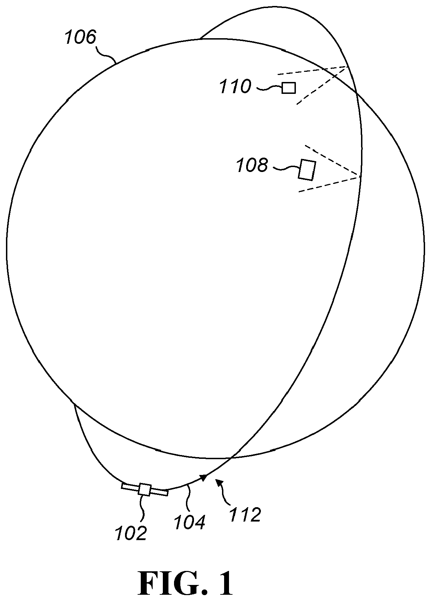

Turning now to FIG. 1, there is illustrated a satellite 102 (such as a SAR satellite) in an orbit 104 around the Earth 106. The satellite's trajectory includes passing over a location 108 to be imaged by satellite 102 and a ground station 110 configured to communicate data to and from satellite 102. A new request to acquire an image of location 108 may be submitted to a ground station 110 after satellite 102 is launched. In this case, the tasking of the request must be communicated to satellite 102 via an uplink from Earth 106. FIG. 1 shows a single ground station 110. In a practical implementation, multiple ground stations are spread around Earth 106 and may be used by many customers to communicate with their satellites. Once a request to "book" time at a ground station is sent, the ground station crew will typically need time to queue up the required transmission for either uplinking or downlinking.

In an example, satellite 102 is orbiting Earth 106 in a low-earth orbit. A low-earth orbit can be from 160 km to 1000 km above the surface of Earth 106. Examples of Earth-monitoring satellites can have orbits of between 450 km and 650 km above Earth 106. In some embodiments, a satellite has an orbit that is approximately 550 km above Earth's surface. At an orbit of 550 km above Earth 106, for example, the satellite is effectively traversing the ground at about 7.5 km/s, or 27,000 km/h. Most satellites in this orbit will traverse Earth 106 at a speed that is in the range of 7-8 km/s.

In an example, satellite 102 uses synthetic aperture radar to image Earth 106 in all manner of conditions, including through cloud, fog, smoke, and at night. Satellite 102 can also use reflectors or phased-array antennas to help direct the synthetic aperture radar beam.

In the example of FIG. 1, the uplink to satellite 102 in low-earth orbit is provided by ground station 110. As satellite 102 moves along orbit 104 in the direction shown by arrow 112, it first passes over location 108 and then passes over ground station 110. As a result, in this example a new request uplinked at ground station 110 to satellite 102 to image location 108 cannot be carried out until the satellite's next pass over location 108. This builds a delay into the process.

When satellite 102 passes over ground station 110, the order is uplinked by being transmitted from ground station 110 to satellite 102. The next time satellite 102 passes over location 108, the image can be acquired.

There may be a considerable amount of time before satellite 102 next passes over location 108. When satellite 102 has completed a full orbit, Earth 106 will have rotated through a small angle so that satellite 102 will no long pass directly over location 108. Earth 106 may need to undergo several full rotations (taking several days) before satellite 102 passes over location 108 again and is able to acquire the requested image.

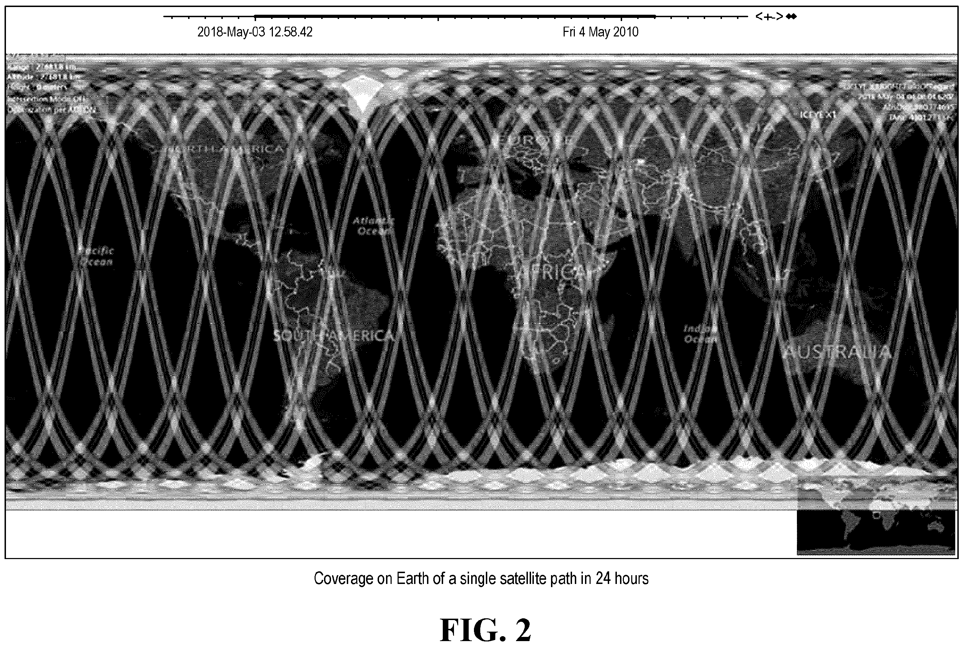

This can be readily appreciated from the coverage map illustrated in FIG. 2 which shows the coverage on Earth of a satellite path in 24 hours. Well under half the Earth is covered in 24 hours, indicating that it may take several days to provide a complete coverage and for satellite 102 of FIG. 1 to pass directly over location 108 again to acquire the requested image. This scenario can easily contribute around a week in the delay between submitting the new request and delivering the requested image.

In the example of FIG. 1, after eventually passing location 108 for a second time after the request was submitted, satellite 102 will shortly thereafter pass over ground station 110 to downlink the captured image. Once received by ground station 110, the image can be delivered to an end user and/or processed to extract other usable information such as land monitoring parameters for delivery to the end user.

As a result of the time lag of up to a week or more that can occur between request submission and delivery, Earth observation satellites are typically not used for applications that require faster response times such as hours or minutes. Instead, it is typical for Earth observation missions to be predefined before launch to provide specific images of predetermined events or to provide continuous known performance such as regular monitoring of known locations that can be scheduled in advance.

If it is attempted to add an additional task to a pre-existing schedule after launch, the additional task will be subject to the possible delays described above of up to a week, and furthermore it may be necessary to fit the task into gaps in the existing schedule which is likely not only to exacerbate delays but also to result in an inefficient use of overall resources in the mission.

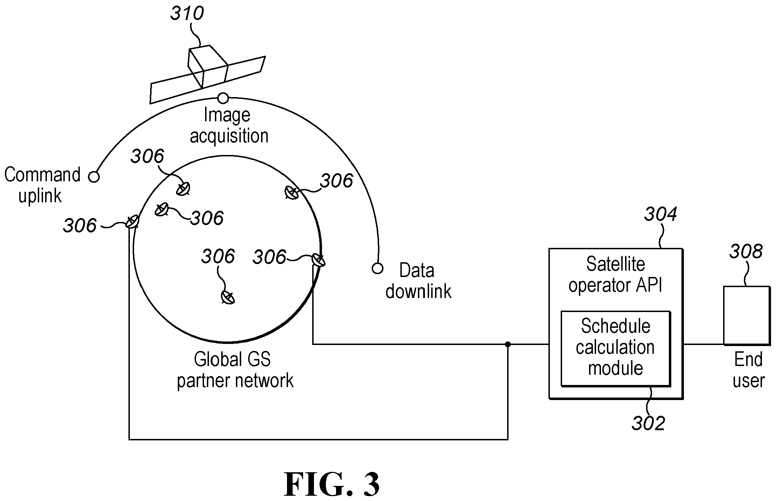

Using another approach, it is possible to improve delivery times for new tasks and to use resources more efficiently. Referring to FIG. 3, a system for managing a network of satellites includes a schedule calculation module 302 for calculating a schedule for a network of satellites to execute tasks. Schedule calculation module 302 may be provided in a satellite operator application programming interface (API) 304 that is configured to communicate with a network of ground stations 306 and an end user 308. Ground stations 306 provide uplinks and downlinks to communicate to and from satellite 310 of the set. A representative satellite 310 of the set is shown in FIG. 3. Other satellites of the set are not shown in this figure but the set may include several or more satellites 310, each of which is configured to communicate with ground stations 306.

Schedule calculation module 302 may be comprised in a single computing system or may be distributed across multiple computing systems across multiple locations. For example, schedule calculation module 302 may be located at a ground station, or at another location in communication with multiple ground stations.

By using a network of satellites, for example a network of 18 satellites, the overall coverage of Earth by the set in a given time period is improved. Consequently, the delays caused by waiting for a satellite to pass over a location to be imaged are reduced.

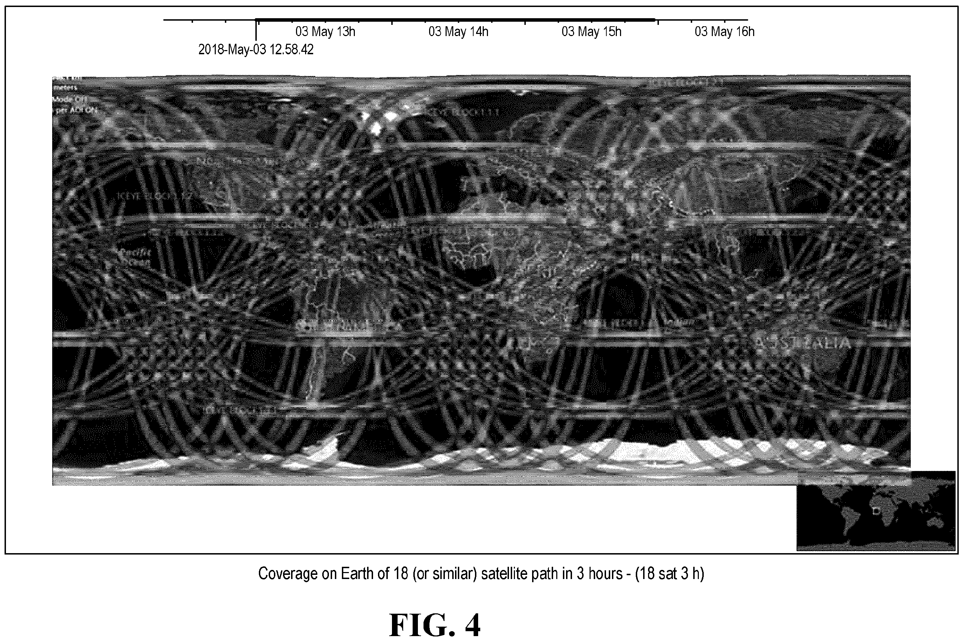

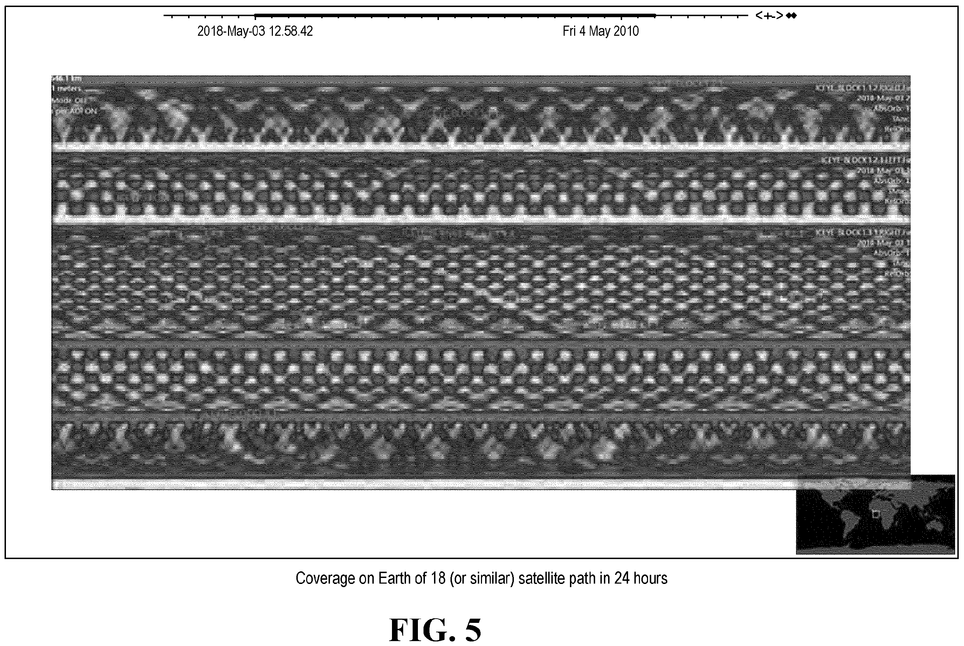

This can be appreciated by referring to the maps shown in FIGS. 4 and 5. FIG. 4 shows a map of the coverage on Earth of 18 satellite paths in 3 hours, and FIG. 5 shows the coverage on Earth of the same 18 satellites in 24 hours. Substantially complete coverage of the Earth is achieved in 24 hours, unlike the situation with a single Earth observation satellite shown in FIG. 2.

The larger the number of satellites in the satellite network, the better the overall coverage of Earth by the satellite network in a given time period (e.g. reduced time between successive images of the same area or feature on Earth). For example, having two or more satellites will already provide significantly increased coverage compared to having only one satellite in the network. Three or more satellites would provide even better coverage, as would five or more satellites, or twelve or more satellites. Eighteen or more satellites as described in this example provide exceptional coverage. Even a satellite network with five or more satellites can achieve repeat times (time between possible successive images of one area or feature on Earth) previously unheard of in Earth monitoring.

However, as the number of satellites in the satellite network increases, the complexity of scheduling, optimizing, and tasking all of the satellites to carry out, post-launch, their assigned tasks increases exponentially. According to embodiments of the disclosure, and in order to efficiently deal with such an ever-increasing demand on the satellite network, schedule calculation module 302 and supporting databases may be used to handle these complex processing and tasking activities.

In particular, schedule calculation module 302 shown in FIG. 3 actively manages the tasking of the launched satellites 310 as new tasks are received. When a new task is received, a schedule of the entire network of satellites is recalculated so that the overall tasking can be kept efficient while incorporating the new task with an acceptable delivery time. This approach may enable turn-around times of a few hours or less for tasks submitted post-launch.

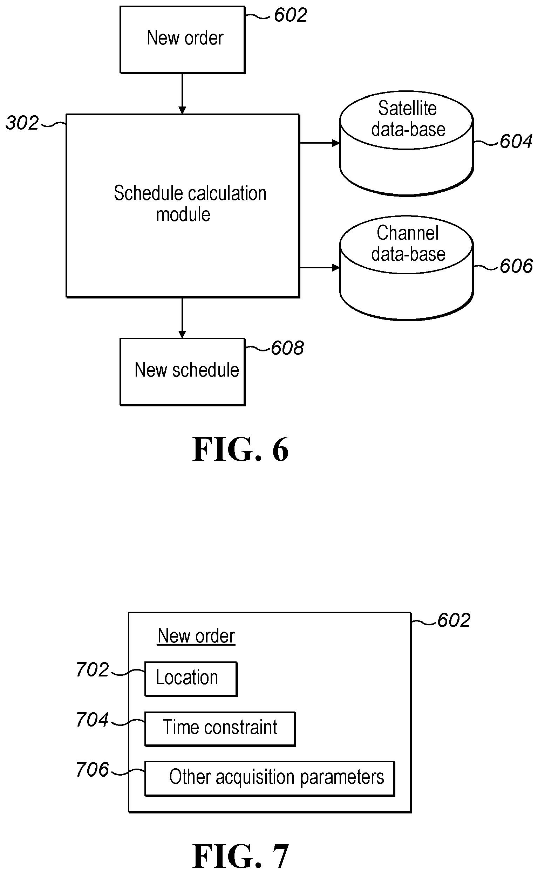

Schedule calculation module 302 is shown in FIG. 6 in relation to a new task or order 602, a satellite database 604, a channel database 606, and a new schedule 608. Schedule calculation module 302, satellite database 604, and channel database 606 may form part of a ground control station or satellite operator API, and together function to calculate a new schedule 608 every time a new order 602 is received. Schedule calculation module 302 is configured to recalculate the schedule using data from satellite database 604 and channel database 606 which store data such as satellite paths, satellite availability, ground station locations and availability, and available communication channels between the satellites and the ground stations. Details of these data and how they are used are described below.

Referring to FIG. 7, a new order 602 generally defines one or more geographical locations to be imaged and a time requirement for when the one or more images are to be acquired. The time requirement may, for example, be that the images are required immediately or as soon as possible, or may comprise one or more periods of time in the future during which images should be taken. Typical requests may require that images be taken at regular time intervals, for example daily. Other acquisition parameters may also be stipulated in a given request. For example, a customer may wish to specify the mode of acquisition such as 'spotlight' or 'stripmap' - these give trade-offs between resolution and area coverage (spotlight providing a higher resolution at the expense of smaller area coverage, and stripmap the reverse). This may depend on any desired further processing that the customer would wish to perform with an image (for example, object classification, change detection, etc.). As such, referring to FIG. 7, new order 602 may comprise an indication of a location 702, a time constraint 704, and any other acquisition parameters 706.

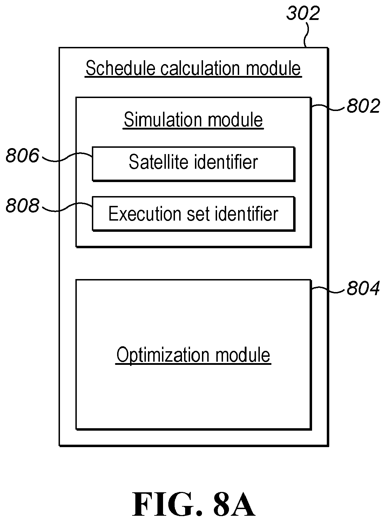

Every time a new order 602 is received, schedule calculation module 302 calculates an updated schedule for the satellites that includes imaging the one or more locations defined in new order 602. In order to achieve this, schedule calculation module may comprise, as shown in FIG. 8A, a simulation module 802 configured to determine options for how the schedule can be updated to accommodate new order 602, and an optimisation module 804 configured to determine a suitable updated schedule based on the available options.

Simulation module 802 comprises a satellite identifier 806 configured to identify satellites that, based on their orbital positions and projected paths, can acquire the requested images. The requested images include the ones that have been requested in new order 602 as well as the ones that have been requested in previous orders and have not yet been acquired. The satellites that can acquire the images are those whose paths take them over the requested locations in accordance with the time constraints specified in the requests.

In order to identify which satellites can execute which requests, satellite identifier 806 may be configured to execute a simulation of the satellite paths to determine which satellites will next be passing over the relevant geographical locations. It will be appreciated that an arbitrary acquisition may not be executed perfectly, and that satellite identifier 806 is therefore looking for satellites that would be able to match an arbitrary request to a location within a reasonable threshold of the specified time constraints while also maintaining the other acquisition parameters as well as possible.

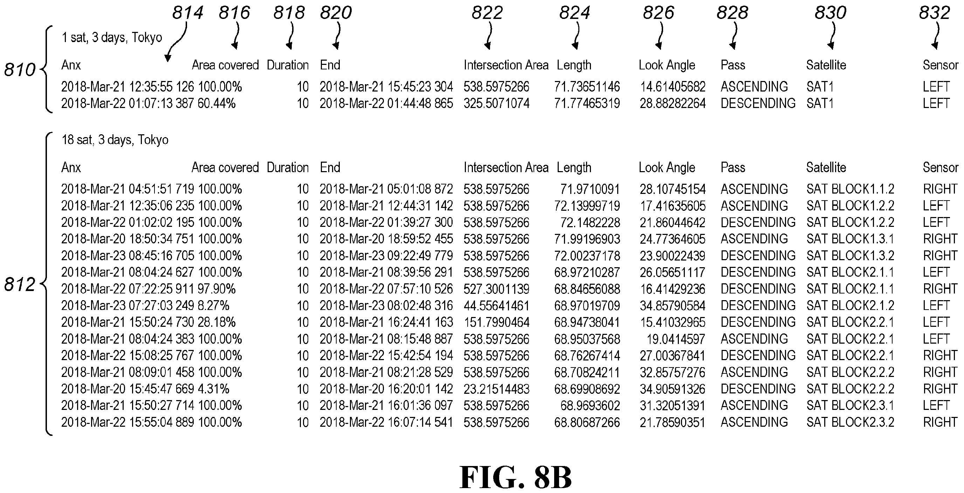

Referring to FIG. 8B, satellite identifier 806 may generate a table of acquisition opportunities for acquiring an image of a location such as Tokyo. In a first example scenario, there is one imaging satellite and satellite identifier 806 generates a first table 810 detailing the possible opportunities to acquire an image of Tokyo using the one satellite during a three-day period. In a second example scenario, there are eighteen satellites and satellite identifier 806 generates a second table 812 detailing the possible opportunities to acquire an image of Tokyo using one or more of the eighteen satellites during a three-day period.

As shown, first table 810 has two rows, each representing an opportunity to acquire an image of Tokyo during the three days. There are two opportunities because, although there is only one satellite, it passes over Tokyo twice during the three days. Details of each acquisition opportunity are provided in the respective rows of table 810. In a first column 'Anx' 814, a coordinated universal time, also known as a universal time coordinated and abbreviated as UTC, is indicated. This provides a timestamp of the acquisition showing the date and time the image would be acquired. A second column 'AreaCovered' 816 indicates the percentage of the requested area that would be imaged in that acquisition. In a third column 'Duration' 818, a duration in seconds is indicated showing how long the satellite's imaging instrument would be activated in order to capture the image. This is ten seconds in this example. A fourth column 'End' 820 indicates the date and time when the imaging instrument would complete the imaging - the end of the ten-second period. In a fifth column 'IntersectionArea' 822, the overlap in square kilometres between the requested area to be imaged and the actual area that would be imaged is indicated. A sixth column 'Length' 824 indicates the distance as projected onto the ground that the satellite would cover during the ten-second imaging operation. In a seventh column 'LookAngle' 826, a tilt of the imaging instrument or the entire satellite on a roll axis is indicated in degrees. An eighth column 'Pass' 828 indicates whether the imaging satellite would be travelling towards the north pole (ascending) or towards the south pole (descending) as projected onto the Earth's surface when the imaging would take place. In a ninth column 'Satellite' 830, the identity of the satellite is indicated. In the scenario of table 810, there is only one satellite and so both rows indicate the same satellite. Finally, a tenth column 'Sensor' 832 indicates whether the satellite is looking to the left or the right, as defined relative to its direction of travel, for example in the case of a SAR satellite. This can be done with separate instruments, or it can be done by rotating the entire satellite to aim the imaging apparatus or the SAR antenna to the left or right side.

The table 812 relating to the second example scenario has similar columns and shows acquisition opportunities using one or more of eighteen satellites in a 3-day period. There are fifteen rows, representing fifteen acquisition opportunities during the three days. As shown in the ninth column 'Satellite', some rows indicate the same satellite, showing that some satellites pass over Tokyo more than once during the three days. For example, the second and third rows both relate to image acquisition by the satellite 'SAT-BLOCK1.2.2'. In total, in the three days, ten of the eighteen satellites pass over Tokyo once or more, providing the fifteen acquisition opportunities shown in table 812.

Returning to FIG. 8A, simulation module 802 also comprises an execution set identifier 808 configured to identify ground stations to complete the request. Ground stations are required to uplink new schedules to the satellites and to downlink image data or data derived from the images from the satellites. Thus, for each image to be acquired, execution set identifier 808 is configured to identify one or more execution sets, each execution set comprising a satellite, a ground station that can provide an uplink, and a ground station that can provide a downlink. By identifying the execution sets, simulation module 802 generates a set of options of how the requests can be executed. For example, in the case of table 810 of FIG. 8B, each row representing a potential acquisition may be associated with five ground stations providing uplink options in the 90 minutes before acquisition and five ground stations providing downlink options in the 90 minutes after acquisition. As a result, for each possible acquisition (i.e. for each row in the table 810), there may be 5x5=25 execution sets. Since there are two potential acquisitions, there could be 2x25=50 possible execution sets to acquire an image of Tokyo in this scenario. In general, a suitable execution set for each image to be acquired needs to be selected from among the available options. For example, a suitable selection of execution sets may provide efficient use of resources across the satellites and ground stations, and may also result in execution of the new request within an acceptable delivery time.

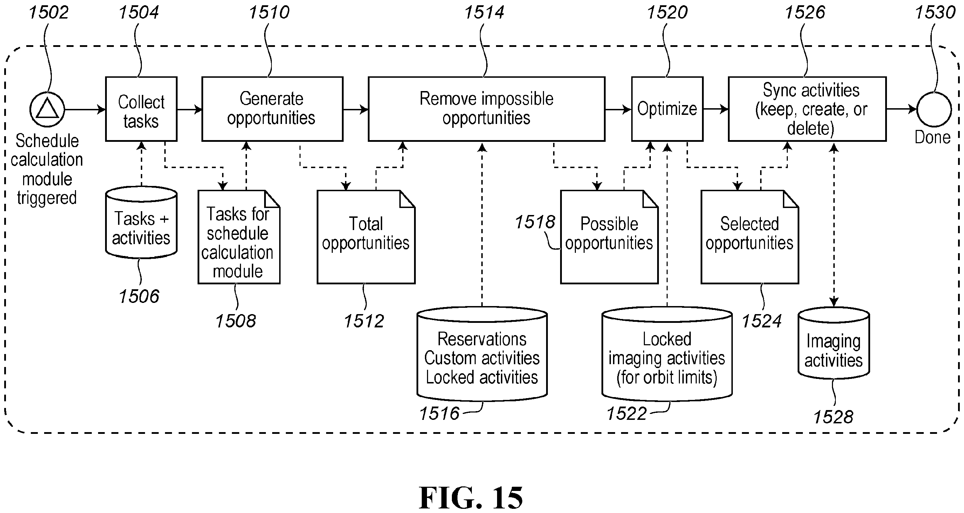

In order to make a suitable selection of execution sets, schedule calculation module 302 comprises an optimisation module 804 configured to determine an optimised set of execution sets. Optimisation module 804 attempts to match the requests to the execution capabilities that are available, and may be configured to optimise for delivery time, efficient use of satellite and ground station resources, and cost-effectiveness. Details of optimisation module 804 are described in further detail below, with reference to FIGS. 15-18.

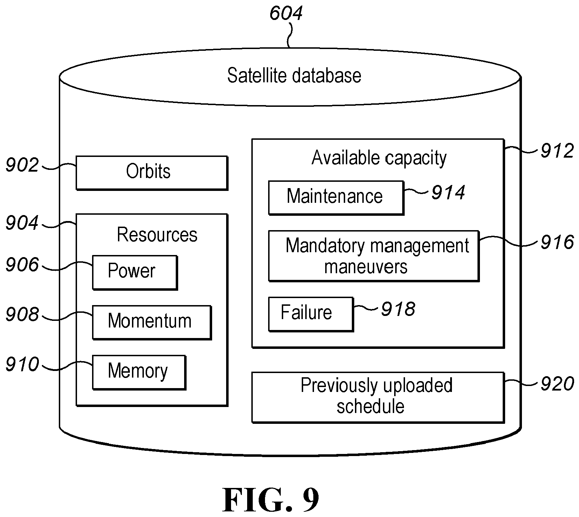

In order to identify satellites and execution sets, simulation module 802 is communicatively connected to a satellite database 604 and a channel database 606. As shown in FIG. 9, satellite database 604 stores satellite data such as satellite orbits 902, satellite resources 904 such as power 906, momentum 908 and memory 910, available capacity 912 including data on reductions in capacity due to satellite maintenance 914, satellite mandatory management manoeuvres 916 and satellite failures 918, and a previously uploaded schedule 920. In examples, satellite database 604, or another database that schedule calculation module 302 has access to, may store business rules that may also be used to determine a new schedule.

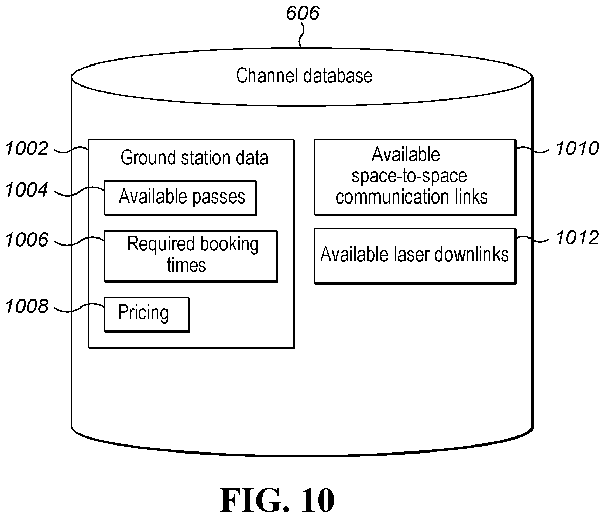

As shown in FIG. 10, channel database 606 stores channel data (relating to communication channels to and from satellites) such as ground station data 1002 including available passes 1004, for example passes when the ground station has capacity to up/downlink or some other measure of availability, required booking times 1006, for example minimum time between booking the ground station and up/downlinking or some other measure of booking time, and pricing 1008, available space-to-space communication links 1010, and available laser downlinks 1012. Space-to-space communication links 1010 may be provided by other satellites such as geostationary satellites or other spacecraft.

Simulation module 802 of schedule calculation module 302 uses data in satellite database 604 and channel database 606 to determine the execution sets that can be used to acquire images.

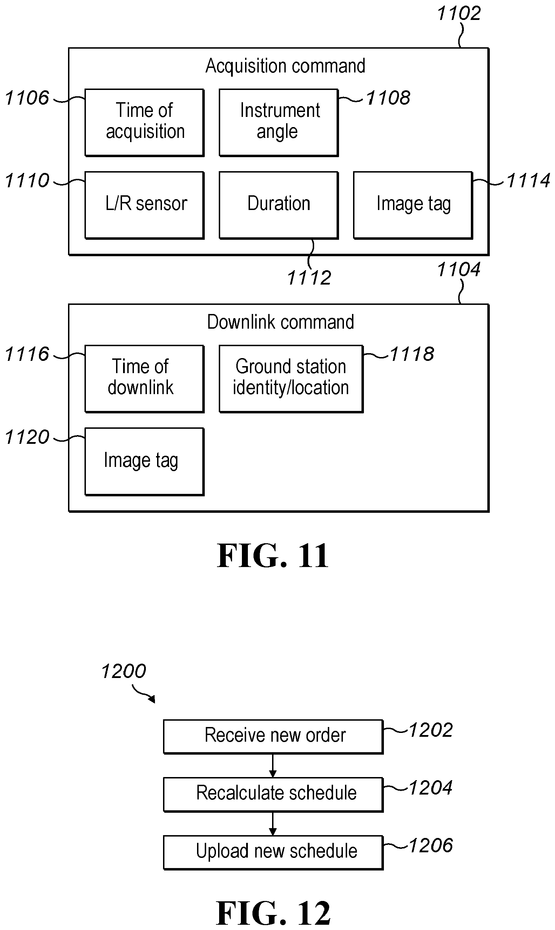

Referring to FIG. 11, when a schedule has been calculated, schedule information is uploaded to the set of satellites to instruct them to acquire and downlink image data. In an embodiment, the schedule information comprises an acquisition command 1102 providing details of when and how to perform the imaging operation, and a downlink command 1104 comprising details of when and how to downlink the acquired data. There is no uplink command because it will be appreciated that the satellite is configured to receive an uplinked signal without being commanded to do so.

Acquisition command 1102 may comprise an indication 1106 of the time the image is to be acquired, an indication 1108 of the angle of the imaging instrument on a roll axis, an indication 1110 of whether a left or right sensor is to be used for the imaging, an indication of a duration 1112 of the imaging operation (for example, ten seconds as in the example above), and an indication 1114 of an image tag. An image tag provides an identifier such as a name or alphanumerical identifier for the image so that it can be identified easily when it is to be downlinked.

Downlink command 1104 may comprise an indication 1116 of the time of the downlink, an indication 1118 of the identity or location of the ground station to which the image is to be downlinked, and an indication 1120 of the image tag. This facilitates the process of identifying the correct image at the scheduled time of the downlink.

Referring to FIG. 12, a method 1200 of assigning tasks to a network of satellites comprises receiving 1202 a new order, recalculating 1204 a schedule 1204, and uploading 1206 the new schedule to the satellites. Method 1200 may be suitably performed by a combination of a satellite operator API and a ground station providing an uplink to a satellite.

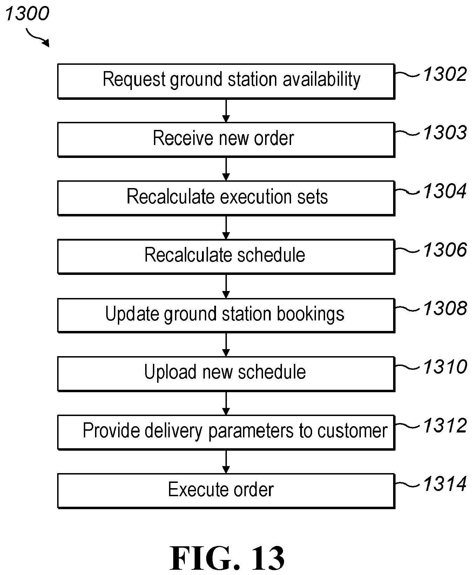

FIG. 13 shows a worked example 1300 of how a satellite operator can manage a constellation of satellites using the apparatus of FIGS. 6, 8, 9 and 10. In order to recalculate the schedule of satellite tasks each time a new order is submitted, schedule calculation module 302 may require up-to-date information on available resources. These include data on the satellites and data on the ground stations so that execution sets can be identified and selected from. As such, the data stored in satellite database 604 and channel database 606 are kept up-to-date. Satellite data, such as orbits 902, power 906, and momentum 908 are within the satellite operator's control and known to the satellite operator. As a result, this data can be kept up-to-date by the satellite operator without any reliance on external providers. However, if the satellite operator uses an external ground station provider, then ground station data 1002 stored in channel database 606 has to be regularly sourced from the ground station provider to keep this information up-to-date. As such, the worked example includes the step of requesting 1302 ground station availability from a ground station provider.

Schedule calculation module 302 receives a new order 602 at step 1303. At this stage, ways in which the pending orders can be executed need to be identified. The pending orders comprise both the new order and any previously received orders that are still to be executed. In the case that there are no previous orders waiting to be executed, the schedule recalculation step is the same and simply comprises calculating a new schedule. Each order may contain the same parameters and resource allocation. In order to identify possible ways to execute the pending orders, schedule calculation module 302 recalculates possible execution sets for each order at step 1304. This creates options from which a new execution set for each pending order can be selected. The schedule is then recalculated at step 1306 by selecting a suitable execution set for each order and generating a new schedule for the satellites on the basis of the selected execution sets. Execution sets may be selected on the basis of meeting optimisation goals such as minimising delivery time, minimising a difference between a requested image acquisition time and an actual image acquisition time, maximising efficiency of use of resources across the satellites, and minimising cost. A table of resource allocation may be updated at this stage. The resource allocation table may contain information relevant to a particular implementation and may include any one or more of:

- Which satellite would be performing the order;

- Storage available on the satellite for imaging tasks;

- The amount of time a satellite is imaging (executing orders) in a particular orbit (this being limited by power availability (battery capacity) and thermal parameters); and

- Which downlink pass over a ground station would be used to transfer the image.

In order to implement the new schedule, ground station bookings are updated at step 1308 to match the new execution sets and provide the uplinks and downlinks that are required by the new schedule. This may involve requesting new bookings and cancelling redundant ones, and may require communicating with the ground station provider to change the booking. The new schedule is uploaded to the satellites at step 1310, or at least to affected satellites that are tasked differently in the new schedule compared to the old schedule. The uploading is implemented using ground stations reserved in the updated ground station booking. At this stage, the ground stations and satellites are ready to execute the orders according to the new schedule, and the delivery parameters can be provided at step 1312 to the customer. Delivery parameters may comprise any one or more of: time of image acquisition; time of delivery; where the image will be sent to, such as the address of the customer's Secure File Transfer Protocol (SFTP) server, or if they will access it from services of the constellation operator; what level of processing the customer requires, e.g. Ground Range Detected (the image is registered to the globe) / Single Look Complex whereby the actual I/Q values of the reflected signal are supplied.

At step 1314 the new order is executed, involving acquiring the required image or images and downlinking the image data or suitable data derived from the images for delivery to the customer.

The schedule is recalculated every time a new order is received or another event that affects capacity to execute orders takes place. For example, events that would affect capacity to execute orders may include maintenance of a satellite or ground station, or failure of a satellite or ground station.

The present disclosure provides various advantages for assigning tasks to a network of satellites. From the point of view of the customer who submits a task, there is an improved turn-around time between submitting a task and receiving a requested satellite image. This means that urgent images can be acquired and delivered faster than using traditional methods. From the point of view of the satellite operator, since the schedule is recalculated each time a new task is received, the available satellites and their resources can be used more efficiently and more cost-effectively when new tasks arrive.

Some embodiments enable satellites with different capabilities to be easily accommodated, and a new schedule can be calculated to provide efficient use of satellite resources, taking into account the different capabilities of different satellites. Two main reasons for satellites having different capabilities include simple evolution, as satellites launched more recently will typically be 'better' with more storage, will have been made according to more robust manufacturing techniques, will have more sophisticated radios for both downlink and imaging, will have more accurate pointing systems, etc. Secondly, degradation in space - satellites are prone to high levels of solar / cosmic radiation which can damage subsystems which in turn can then limit their abilities to function. The distribution and timing of this across a network or constellation is effectively random. Further, different satellites may have different imaging capabilities, such as resolution capability, may use different wavelengths for imaging, or may have better processing and storage capability.

Ground stations and their resources may also be used more efficiently. The present approach is also less susceptible to failure because, in the event an asset such as a satellite or a ground station fails, the schedule may be recalculated and the pending tasks may be accommodated as efficiently as possible using the remaining assets and their resources. This is preferable to a failure of a satellite or ground station resulting in tasks not being able to be executed.

Turning now to FIGS. 15-18, there are described further embodiments of assigning tasks to a network of satellites. The methods described in these embodiments may be implemented using, for example, schedule calculation module 302 described above.

FIG. 15 is a flow diagram of a general method assigning tasks to a network of satellites.

At block 1502, schedule calculation module 302 is triggered. According to some embodiments, schedule calculation module 302 is automatically triggered according to one of two ways:

1. Periodically, according to a pre-set periodicity (such as every hour); and

2. Whenever a task's state is set "Active" (i.e. the task has been received and is ready to be acted upon).

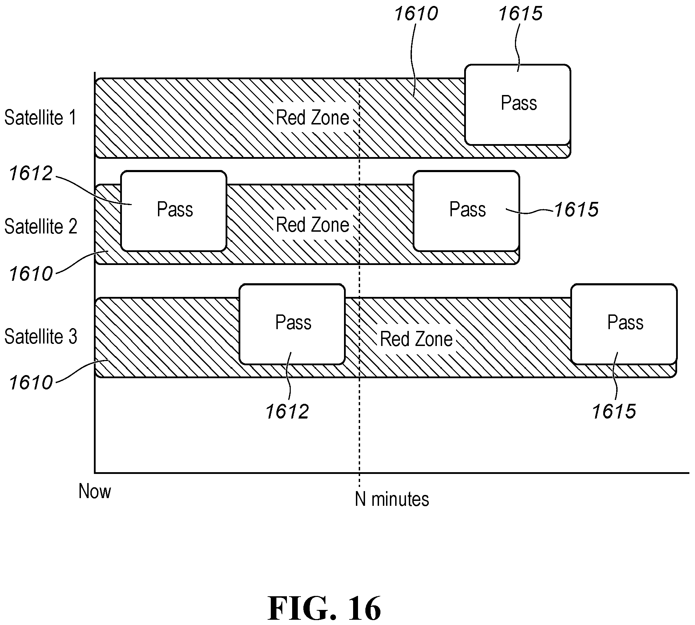

As can be seen in FIG. 16, for each satellite, a "red zone" 1610 extends from the current point in time ("Now") to a pre-set, future point in time referred to as "N minutes" (N minutes from Now). "N minutes" is configurable and is based, for example, on the amount of time schedule calculation module 302 needs in order to perform its optimization. This period of time therefore represents a period of time during which there is insufficient time to optimize any tasks/activities that have already been scheduled for execution between Now and N minutes. Note that, for satellites 2 and 3, red zones 1610 extending between Now and N minutes encompass passes 1612. A pass corresponds to the satellite passing over a ground station and therefore being in a position to receive new scheduling instructions from the ground station.

Beyond N minutes, red zones 1610 extend to the end of the next pass 1615 that has been booked for the satellite in question. This period of time represents a period of time during which new scheduling instructions cannot be sent to the satellite until the satellite has completed its next pass over a ground station. Therefore, during this period of time, even if schedule calculation module 302 has completed its optimization, any new tasks/activities cannot be scheduled on the satellite until the satellite has completed its next pass.

Therefore, generally speaking, any tasks and/or activities scheduled to take place during a redzone 1610 may be considered "locked" and therefore are not taken into consideration by schedule calculation module 302 during its optimization process, as described in further detail below.

Once schedule calculation module 302 is activated, as described above, schedule calculation module 302 fetches any task that meets the following criteria:

- The task is in "active" state.

- The time window associated with the task (i.e. the time period during which the task must be completed) is not wholly located within each satellite's red zone 1610.

- There are no active image acquisition activities associated with the task that were not generated by schedule calculation module 302. For example, if the task is associated with one or more manually-entered image acquisition activities, then schedule calculation module 302 ignores the task.

- The task does not include any active image acquisition activities that are scheduled to occur before the run window of schedule calculation module 302. For example, referring to FIG. 16, schedule calculation module 302 will not fetch any task with an active image acquisition activity set to occur between "Now" and "N minutes", as well as between "N minutes" and the end of the next pass booked for a satellite, since such image acquisition activities are locked and are not modifiable by schedule calculation module 302.

At block 1504, schedule calculation module 302 collects one or more tasks that have been received (for example, from customers of the satellite network operator) and that have not yet been assigned to a satellite. For example, schedule calculation module 302 may access and retrieve tasks and activities that have been received and that are being stored in a database 1506. As described in further detail below, each task may be associated with one or more activities which may be generated in response to the scheduling of a task. Activities may also be prioritized based on one or more parameters of the task. For example, if a task requires that an image be taken within the next 72 hours, then multiple activities may be generated for the task, with each activity requiring that an attempt be made to capture the image every 24 hours, for example.

At block 1508, schedule calculation module 302 identifies tasks that have been locked (e.g. those that are located within red zones 1610 in FIG. 16) and those that are able to be rescheduled (e.g. those that are located outside of red zones 1610 in FIG. 16). Only those tasks that are still able to be rescheduled are then passed to block 1510 in the process.

At block 1510, based on the tasks that have been collected by schedule calculation module 302, schedule calculation module 302 identifies one or more opportunities. As described above, an opportunity represents a given satellite of the network potentially executing the task (e.g. in the case of image acquisition, potentially capturing the desired image or images of the geographical location). Details of how the opportunities are identified are discussed in further detail below.

In an embodiment, for each outstanding task that has been collected by schedule calculation module 302, the most up-to-date opportunities are generated at block 1510 . The parameters of some of these opportunities may have only changed a small amount (e.g. based on slight variations in orbits) when compared to corresponding opportunities generated by schedule calculation module 302 during previous runs.

In an alternative embodiment, a separate opportunity generator is run regularly outside of schedule calculation module 302 in order to generate opportunities for all active tasks. For example, it could be scheduled to run every hour, or every time new True Line Elements (TLEs) are received for the satellites. TLEs provide the most up-to-date information about the speed and direction of the satellites, and these updated orbits are taken into account in generating the opportunities, which may vary slightly from previous calculations. Once calculated, these opportunities are put into an opportunity cache, replacing previously calculated opportunities.

In this alternative embodiment that uses opportunity caching, when schedule calculation module 302 is triggered, for example by a new task, only opportunities for the new task need to be generated at block 1510. Opportunities for all other active tasks can be pulled from the opportunity cache. In this manner, significant processing time can be saved in running schedule calculation module 302, which may allow for a more optimum and timely scheduling of tasks.

Regardless of whether opportunities for all tasks are generated at block 1510 or opportunity caching is used for already existing tasks, a set of total opportunities (representing all the identified opportunities) is generated at block 1512 by schedule calculation module 302.

At block 1514, schedule calculation module 302 identifies and removes any opportunity that is deemed impossible. An impossible opportunity may be an opportunity that cannot be performed when account is taken of other pre-scheduled tasks or activities that a given satellite is scheduled to perform. For example, schedule calculation module 302 may determine that a given satellite is in principle capable of executing a task (within the constraints defined by the task) that has been retrieved at block 1504. However, schedule calculation module 302 may also determine that, when the given satellite will be in the position required to execute the task, the satellite has already been scheduled for maintenance work. Schedule calculation module 302 may therefore identify the corresponding opportunity as being an impossible opportunity, and the opportunity is therefore filtered out of the set of total opportunities. The filtering out of impossible opportunities may be based on data retrieved from a database 1516 of reservations, custom activities, and locked activities. Such data may be representative of scheduled tasks and activities that cannot be rescheduled and that may therefore prevent a given opportunity from actually being carried out by the corresponding satellite.

Other constraints that may result in an opportunity from the set of Total Opportunities being filtered out include a satellite being already scheduled to perform a task that was not fetched by schedule calculation module 302 at block 1504 (for example, a task that was generated by the satellite network operator as opposed to being received by a customer of the satellite network operator), as well as any pre-existing custom activities that have been reserved for the satellite and that overlap with the opportunity.

At block 1518, a set of possible opportunities (i.e. the opportunities that remain after filtering out impossible opportunities from the set of total opportunities) is generated by schedule calculation module 302.

At block 1520, as described above, optimization module 804 is used to optimize the various possible opportunities based on one or more constraints. At block 1522, the details of any locked activities (e.g. activities that are located within red zones 1610 in FIG. 16) are provided to optimization module 804 so that optimization module 804 may take into account such locked activities when performing the optimization process.

During the optimization process, a scheduling score (or simply "score") is calculated for each opportunity based on a number of parameters including task priority, opportunity scarcity, how many opportunities are ahead, the availability of future downlinks, and task seniority (these parameters are discussed in further detail below). During each iteration of the optimization process, schedule calculation module 302 is then configured to output a binary result (i.e. either the opportunity is selected, or the opportunity is not selected) and maximize the score. As also described in further detail below, during the optimization process, constraints are set to limit, for example, one opportunity per task, to prevent overlaps between opportunities corresponding the same satellite, and that the orbit limits would be respected given existing, locked imaging. According to some embodiments, linear programming tools, for example the Coin-or branch and cut (CBC) solver and Coin-OR's PuLP library, can be used to solve the optimization problem.

At block 1524, based on the results of the optimization process, optimization module 804 outputs a set of selected opportunities that represent the assignment of each task to a corresponding satellite of the network.

At block 1526, based on the selected opportunities, schedule calculation module 302 then synchronizes with existing activities in database 1528. For example, if an existing activity in database 1528 is sufficiently similar to a selected opportunity (e.g. if both the selected opportunity and the imaging activity correspond to the same satellite and to a task that involves imaging the same or similar AoI at the same or similar (e.g. +/- 30s) point in time), then the activity is kept unchanged and the opportunity may be deleted. Otherwise, schedule calculation module 302 cancels any active imaging activities scheduled for satellites corresponding to the selected opportunities and that would overlap with the constraints defined in the opportunities. Schedule calculation module 302 then generates new activities based on the selected opportunities, and the activities are uplinked to their assigned satellites. When a new activity is created, it may be cross-checked against orbit limits and for any other potential conflicts. For example, schedule calculation module 302 may check to see whether the associated task was cancelled during the optimization process, in which case the activity can be deleted.

At block 1530, the assignment of the received tasks is completed and schedule calculation module 302 awaits being triggered again at block 1502.

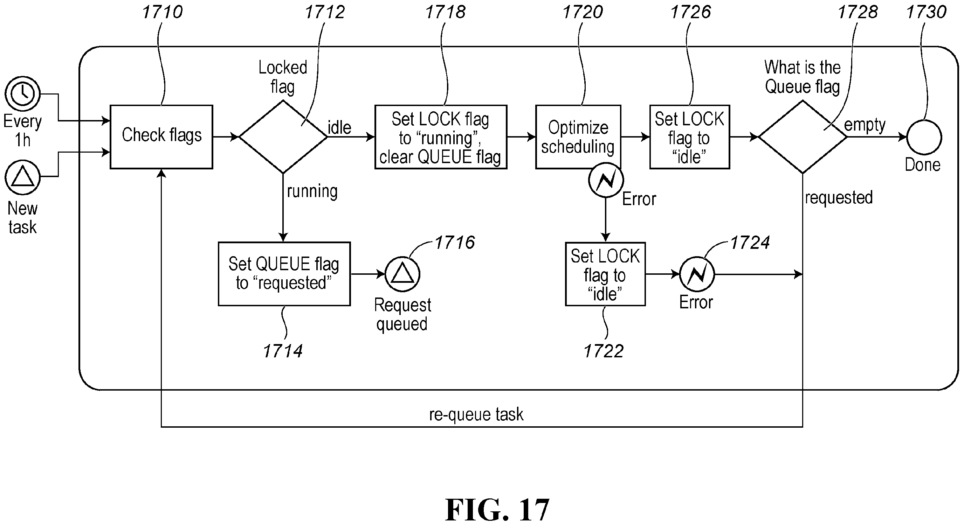

Turning to FIG. 17, there will now be described an example method of processing tasks. The purpose of the method shown in FIG. 17 is to prevent two or more instances of the optimization process running in parallel. Generally speaking, while schedule calculation module 302 is optimizing a set of tasks, this is achieved by preventing any new tasks that are received in the meantime from being included in the optimization. The method in FIG. 17 may be executed periodically (for example every hour) and in response to a new task received.

Starting at block 1710, the states of a LOCK flag and a QUEUE flag are checked.

At block 1712, the status of the LOCK flag is determined to be either locked (i.e. schedule calculation module 302 is currently running) or unlocked (i.e. schedule calculation module 302 is currently idle).

If the status of the LOCK flag is determined to be locked, then for the time being any queued tasks cannot be processed.

Therefore, at block 1714, the QUEUE flag is set to "requested", and at block 1716 any newly received task is queued.

If the status of the LOCK flag is determined to be unlocked, then schedule calculation module 302 is available to process any queued tasks.

Therefore, at block 1718, the LOCK flag is set to "running", the QUEUE flag is cleared, and at block 120 any queued tasks are fetched by schedule calculation module 302 and are processed in the manner described in more detail below.

At block 1722, if an error occurs during the processing of the tasks, then the LOCK flag is set to "idle", and at block 1724 the process returns to block 1710.

At block 1728, the status of the QUEUE flag is determined.

If the QUEUE flag indicates that there are other tasks in the queue, then the process returns to block 1710.

If the QUEUE flag indicates that there are no other tasks in the queue, then at block 1730 the process ends.

The functionality of optimization module 804 will now be described in more detail.

During the optimization process, and at the end of each iteration of the process, the decision of optimization module 804 to keep one opportunity and not another opportunity is based on the resolution of the optimization problem. Solving the optimization problem relies on identifying the maximum or minimum of a function. Optimization module 804 assigns each opportunity a score or heuristic based on a number of different factors. This initial score is then updated during the optimization process. Once the optimization problem has been solved, the resulting scores rank the various opportunities. According to some embodiments, the optimization problem is configured such that the aim is to obtain the highest "total score" which is the sum of the score assigned to each opportunity input to optimization module 804.

In the following:

- "opps_ids" is a list of the IDs of the opportunities input to optimization module 804;

- "score" is a vector mapping an opportunity to its scheduling_score; and

- "opps_chosen" is a vector of variables that can be 0 or 1:

  ∘ opps_chosen[id] set to 1 means that the opportunity corresponding to [id] has been chosen; and

  ∘ opps_chosen[id] set to 0 means that the opportunity corresponding to [id] has not been chosen.

The expression of the score is therefore:

sum(opps_chosen[id]*score[id] for id in opps_ids)

With the optimization problem expressed as such, it is already possible to algorithmically solve the problem via linear optimization. If that was all, then naturally setting opps_chosen[id] = 1 for all id in opps_ids is the solution that maximizes the score, meaning that all opportunities would be selected. In theory this would make sense since all tasks want to be executed (e.g. all image acquisition requests want to be competed). However, in practice a number of constraints make this impossible. These constrains need to be converted into mathematical expressions in order to properly express the optimization problem.

The constraints include the following:

1. **Any two images** cannot be taken at the same time, and in particular any two acquisitions need to be **separated by a minimum amount of time.** Two opportunities that are too close in time are said to be "conflicting".

2. The duration of any single image cannot extend beyond a certain maximum duration.

3. In any single orbit of the satellite, a certain maximum number of images can be taken.

4. The total time spent imaging during a given orbit (this will depend on the total number of images that are requested during the orbit).

5. **Only one opportunity** can be picked **for any given task.**

Constraint 1

In order to mathematically express a constraint, the expression should be formulated on the components of the vector opps_chosen. Let us assume that i and j are two opportunities that are conflicting. We want optimization module 804 to select only one of them. One way to express this is by using:

$$opps\_chosen[i] + opps\_chosen[j] <= 1$$

Therefore, opps_chosen[i] and opps_chosen[i] cannot both be equal to 1 since the sum would be 2 and that would violate the constraint. In this case, either opportunity, or neither opportunity, is selected (but not both).

Constraint 2

Let opp_1, opp_2, ... opp_n be the opportunities that can fulfill a given task. The constraint can be expressed as:

$$sum(opps\_chosen[opp\_i] \text{ for i in}[|1...n|]) <= 1$$

This constraint needs to be used for every task considered by optimization module 804.

Constraint 3

Introducing Nmax as the maximum number images that can be taken per orbit, let opp_1, opp_2, ... opp_n be a family of opportunities that are in the same orbit. This gives the constraint:

$$sum(opps\_chosen[opp\_i] \sim i) <= Nmax$$

~i: for i in[|1...n|]
This needs to be repeated for every orbit of every satellite. Nmax may be different for different satellites.

Constraint 4

For this constraint, instead of using a mathematical expression, it is simplest to remove any opportunity whose imaging duration would be exceeded if it were to execute the task.

Constraint 5

Since the total time spent imaging during a given orbit depends on the total number of images that are requested during the orbit, max_duration is introduced to represent the maximum image duration allowed per number of images. For example, max_duration[3] == 95 s means that the maximum total duration for three images taken in one orbit is 95 seconds. For example, 30 s + 30 s + 30 s would work, while 40 s + 30 s + 30 s would not. If four images are desired, then the total imaging duration must not exceed max_duration[4], etc.
While one may be inclined to express the constraint as follows,

$$sum(duration[opp\_i] \times opps\_chosen[opp\_i] \sim i) <= max\_duration(sum(opps\_chosen[opp\_i] \sim i),$$

this is not a valid expression for a basic linear optimization problem, since the right-hand side cannot be a function of the variables.
Another option would be to reformulate the expression in a way that is similar to the previous constraint and to consider all the possible combinations of 1, 2, ..., Nmax opportunities while adding an additional constraint for that set.
Let k be a number in [|1...Nmax|], and opp_i for i in [|1...k|] be a family of k opportunities in a given orbit (among all the opportunities for that orbit). The constraint would then be:

$$sum(duration[opp\_i] \times opps\_chosen[opp\_i] \text{ for i in } [|1..k|]) <= max\_duration(k)$$

Let's assume that we are considering 10 opportunities and that Nmax is 5. First, all the constraints for all the sets of 2 opportunities that would become images would be added which is 10x9=90 pairs. Then, all the constraints for all the sets of 3 opportunities that would become images would be added which is 10x9x8=720 3-uples. Then, all the constraints for all the sets of 4 opportunities that would become images would be added which is 10x9x8x7=5040 4-uples. Then, all the constraints for all the sets of 5 opportunities that would become images would be added which is 10x9x8x7x6 = 30240 5-uples.

As one sees, while the number in this example is still relatively low, with Nmax = 7 and 20 opportunities an additional 400 million constraints need to be added for that orbit alone. A different approach may therefore be required.

According to a different approach, Nmax constraints are added to each orbit:

$$\text{sum(duration[opp\_i] x opps\_chosen[opp\_i] ~i)} <= \text{max\_duration(2)}$$

$$\text{sum(duration[opp\_i] x opps\_chosen[opp\_i] ~i)} <= \text{max\_duration(3)}$$

$$\ldots$$

$$\text{sum(duration[opp\_i] x opps\_chosen[opp\_i] ~i)} <= \text{max\_duration(Nmax)}$$

An issue here is that the problem may be over-constrained. Ideally, a single constraint should be selected based on a predefined condition.

To do so, an extra set of variables is used. A family of variables (per orbit) is introduced for k in [|1...Nmax|]:

$$\text{is\_equal\_to[k]} = 1 \text{ if sum(opps\_chosen[opp\_i] ~i)} == k \text{ else } 0$$

Such a family of variables may then be plugged into the constraints above:

$$\text{sum(duration[opp\_i] x opps\_chosen[opp\_i] ~i)} <= \text{max\_duration(2)} + M \text{ x } (1 - \text{is\_equal\_to[2]})$$

$$\text{sum(duration[opp\_i] x opps\_chosen[opp\_i] ~i)} <= \text{max\_duration(3)} + M \text{ x } (1 - \text{is\_equal\_to[3]})$$

$$\ldots$$

$$\text{sum(duration[opp\_i] x opps\_chosen[opp\_i] ~i)} <= \text{max\_duration(Nmax)} + M \text{ x } (1 - \text{is\_equal\_to[Nmax]})$$

with M being a large number so that if (1 - is_equal_to[k]) = 1 then the constraint is essentially useless.

However, this expression is also not linear-optimization compatible.

Therefore, two other families of variables are introduced to replace is_equal_to. For k in [|1...Nmax|]:

$$\text{is\_more\_than[k]} = 1 \text{ if sum(opps\_chosen[opp\_i] ~i)} >= k \text{ else } 0$$

$$\text{is\_less\_than[k]} = 1 \text{ if sum(opps\_chosen[opp\_i] ~i)} <= k \text{ else } 0$$

This is also not linear-optimization compatible, but the expression can be converted as follows. For k in [|1...Nmax|]:

$$\text{is\_more\_than[k]} >= (\text{sum(opps\_chosen[opp\_i] ~i)} - k)/ \text{Nmax} + 0.0001$$

$$\text{is\_more\_than[k]} <= (\text{sum(opps\_chosen[opp\_i] ~i)} - k)/ \text{Nmax} + 1.0001$$

Similarly:

$$\text{is\_less\_than[k]} >= (k - \text{sum(opps\_chosen[opp\_i] ~i)})/ \text{Nmax} + 0.0001$$

$$is\_less\_than[k] <= (k - sum(opps\_chosen[opp\_i] \sim i))/ Nmax + 1.0001$$

*The "0.001" are used to avoid using strict non-equivalence that a linear optimization solver typically has trouble handling.*

As can be seen, for Constraint 5, 2 * Nmax more variables were introduced, 4 * Nmax constraints were introduced for these variables, and Nmax constraints were introduced strictly for expressing the total imaging duration limit per orbit.

As explained above, optimization module 804 assigns a score or heuristic to each opportunity, based on a number of different factors. This initial score is then updated during the optimization process.

Once the optimization problem has been solved (based on the above constraints), the resulting scores rank the various opportunities. In short, if two opportunities are in conflict, optimization module 804 will choose the opportunity with the higher score.

According to some embodiments, the score of an opportunity takes into account four parameters, ordered by importance as follows:

    1. **Task priority.** This can be broken down into:

        **a. Task tier,** which is the number of hundreds in the task priority; i.e. priority 300 and 320 are tier-3 priorities

        **b. [find a name],** which is the priority stripped from the task tier; i.e. priority 320 is [find a name] 20

    2. **The seniority of a task,** or how old the task is. In case the scores for two different opportunities are determined to be equal based on consideration 1 above, then the opportunity associated with the older task (i.e. the task with the greater seniority) will win the tie-break. The task's seniority may be determined using the task ID since IDs are generated based on the order of creation of tasks. In other words, a lower task ID means a higher seniority.

    3. **The time distance from now until the opportunity,** which may be referred to in code as "opps ahead". This score may be used to prioritize one or more opportunities from among a set of opportunities associated with a common task.

The score is based on the above three parameters which are combined to produce a single score. In particular, according to some embodiments, parameter 1 is weighted more heavily than parameter 2 which is weighted more heavily than parameter 3. As an example, a higher score will be generated for an opportunity A for a task having a task priority of 300 and an ID of 100, than for an opportunity B for a task having a task priority of 199 and an ID of 1 (since the task priority for opportunity A is higher than that of opportunity B).

According to some embodiments, each parameter is evaluated and normalized between 0 and 99 and then concatenated. Taking the above example, the scores for opportunities A and B would be generated as follows:

- Opportunity A: Tier 3. extra 0. trimmed priority 00. scarcity 10. opps ahead 99. seniority 01 ---> 3000109901

- Opportunity B: Tier 1. extra 0. trimmed priority 99. scarcity 99. opps ahead 99. seniority 99 ---> 1099999999

Since the score of 3000109901 is higher than the score of 1099999999, opportunity A would win in case of a conflict.

The parameters do not necessarily have to be ordered and weighted in the way described above. The parameters can be ordered or weighted differently depending on the situation. For example, if the priority of the network operator is to try to get as many of the tasks completed as possible rather than just ensuring that prioritized tasks are dealt with first, then the seniority of the task may become the most important parameter and will be weighted more heavily as a result.

In some embodiments, other parameters may be included and some of the above parameters excluded from the calculation of the score. In an example, a parameter related to future downlink availability can also be included in the scoring, or can replace one of the existing parameters (e.g., the seniority of the task) in the scoring. In an embodiment, the future downlink availability can comprise how long it takes to downlink the relevant data after the task has been performed.

Often, as in the case of SAR imaging, the task of imaging does not become useful until the raw data is downloaded from the satellite and processed into an image. This can happen on the satellite but more typically this is done on Earth after the data is downlinked. Traditionally, due to the low numbers of SAR satellites in orbit and SAR constellations that only included at most three satellites, repeat times (the amount of time between successive imaging tasks of a particular area of interest) could be on the order of weeks or even months. As such, SAR was used for tasks such as mapping or for looking at changes that occur over a long period of time, and relative to this the time taken to downlink the image was not very important.

More recently, with the advent of larger constellations of SAR satellites, particularly constellations of micro SAR satellites each with a mass of between approximately 100 to 500 kg, satellites are able to return to the same location above the Earth more frequently, for example once per day, once per 12 hours, once per 6 hours, or even more frequently. Such improvements allow for tracking of more dynamic scenes and objects, for which the time between taking the image and the time for downlinking to image data the ground becomes more important. For example, when identifying and locating a moving object such as a ship, downlink availability becomes very important. The longer the time between acquiring the image and downlinking the image to the ground, the less accurate (and hence less valuable) that data becomes. Hence, opportunities with a short duration of time between image acquisition and downlinking the image may be scored more highly, possibly even over images than can be taken sooner but that would have to wait a longer time prior to downlink. Counter-intuitively, a later imaging opportunity may be preferred over an earlier imaging opportunity if a downlink can occur immediately after image acquisition. In these cases, scheduling systems that prioritize opportunities based only on the time distance between now and the opportunity would not arrive at an optimum result. Scheduling systems that take into account future downlink availability can help to solve this problem. In some cases, if the time between acquiring the image and downlinking the image becomes too long, the value of the image may fall to zero and the downlinking may not even occur if there are other higher-scoring opportunities to put in the schedule.

The above describes embodiments using linear programming techniques to optimize the scheduling by formulating the constraints of the satellite problem, and in particular the constraints related to small SAR satellites, in a way that can be used in linear programming.

In another embodiment, a constraint programming or constraint optimization approach can be used instead of linear programming or in combination with linear programming to optimize the schedule for a network of satellites. Constraint programming can be used to identify feasible solutions when there are a many possible solutions. In constraint programming, arbitrary constraints can be used and do not necessarily need to be formulated into linear constraints.

The embodiments described above are fully automatic. In some examples, a user or operator of the system may manually instruct some steps of the method to be carried out.

In the described embodiments, the system may be implemented as any form of a computing and/or electronic device. Such a device may comprise one or more processors which may be microprocessors, controllers, or any other suitable type of processors for processing computer-executable instructions to control the operation of the device. In some examples, for example where a system-on-a-chip architecture is used, the processors may include one or more fixed function blocks (also referred to as accelerators) which implement a part of the method in hardware (rather than software or firmware). Platform software comprising an operating system or any other suitable platform software may be provided at the computing-based device to enable application software to be executed on the device.

Various functions described herein can be implemented in hardware, software, or any combination thereof. If implemented in software, the functions can be stored on or transmitted over as one or more instructions or code on a computer-readable medium. Computer-readable media may include, for example, computer-readable storage media. Computer-readable storage media may include volatile or non-volatile, removable or non-removable media implemented in any method or technology for storage of information such as computer-readable instructions, data structures, program modules, or other data. A computer-readable storage media can be any available storage media that may be accessed by a computer. By way of example, and not limitation, such computer-readable storage media may comprise RAM, ROM, EEPROM, flash memory or other memory devices, CD-ROM or other optical disc storage, magnetic disc storage or other magnetic storage devices, or any other medium that can be used to carry or store desired program code in the form of instructions or data structures and that can be accessed by a computer. Disc and disk, as used herein, include compact disc (CD), laser disc, optical disc, digital versatile disc (DVD), floppy disk, and Blu-ray disc (BD). Further, a propagated signal is not included within the scope of computer-readable storage media. Computer-readable media also includes communication media including any medium that facilitates transfer of a computer program from one place to another. A connection, for instance, can be a communication medium. For example, software transmitted from a website, server, or other remote source using a coaxial cable, fiber optic cable, twisted pair, DSL, or wireless technologies such as infrared, radio, and microwave is included in the definition of communication medium. Combinations of the above should also be included within the scope of computer-readable media.

Alternatively, or in addition, the functionality described herein can be performed, at least in part, by one or more hardware logic components. For example, and without limitation, hardware logic components that can be used may include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

Although illustrated as a single system, it is to be understood that the computing device may be a distributed system. Thus, for instance, several devices may be in communication by way of a network connection and may collectively perform tasks described as being performed by the computing device.

Although illustrated as a local device, it will be appreciated that the computing device may be located remotely and accessed via a network or other communication link (for example, using a communication interface).

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants, and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method steps or elements identified, but that such steps or elements do not comprise an exclusive list and a method or apparatus may contain additional steps or elements.

As used herein, the terms 'component' and 'system' are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices.

Further, as used herein, the term 'exemplary' is intended to mean 'serving as an illustration or example of something'.

Further, to the extent that the term 'includes' is used in either the detailed description or the claims, such term is intended to be inclusive in a manner similar to the term 'comprising' as 'comprising' is interpreted when employed as a transitional word in a claim.

The FIGS. illustrate exemplary methods. While the methods are shown and described as being a series of acts that are performed in a particular sequence, it is to be understood and appreciated that the methods are not limited by the order of the sequence. For example, some acts can occur in a different order than what is described herein. In addition, an act can occur concurrently with another act. Further, in some instances, not all acts may be required to implement a method described herein.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

It is furthermore contemplated that any part of any aspect or embodiment discussed in this specification can be implemented or combined with any part of any other aspect or embodiment discussed in this specification.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

**Claims**

**1.** A method of assigning tasks to a network of satellites, wherein the method is performed by one or more computer processors and comprises:

receiving one or more tasks;
for each task:

(a) identifying one or more opportunities, wherein each opportunity corresponds to a satellite from the network of satellites potentially performing the task; and
(b) generating, for each opportunity, a scheduling score based on one or more task constraints including one or more of the following constraints on the task associated with the opportunity corresponding to the scheduling score:

a priority assigned to the task;
a duration of time before the satellite corresponding to the opportunity is able to perform the task; and
an availability of a future downlink; and

(c) assigning, based on each scheduling score, at least one of the one or more tasks to the satellite corresponding to an opportunity identified for the at least one task.

2. The method of claim 1, wherein identifying the one or more opportunities comprises:

determining one or more second task constraints relating to the task; and
identifying the one or more opportunities based on the one or more second task constraints, wherein the one or more second task constraints include one or more of the following constraints:

a duration of the task; and
a point in time by which the task must be completed.

3. The method of claim 2, wherein:

at least one of the one or more received tasks is an image acquisition; and
the one or more second task constraints include one or more of the following further constraints:

an imaging geometry of the image acquisition; and
an area of interest to be imaged.

4. The method of any one of claims 1-3, wherein identifying the one or more opportunities comprises:
determining one or more satellite constraints relating to each satellite of the network of satellites, comprising one or more of:

obtaining a predicted orbit of each satellite;
determining one or more imaging geometries relating to at least one imaging instrument of each satellite; and
determining one or more parameters relating to a power availability of each satellite; and identifying the one or more opportunities based on the one or more satellite constraints.

5. The method of any one of claims 1-4, wherein the future downlink availability comprises a duration of time between performance of the task and downlinking of data obtained as a result of performance of the task.

6. The method of any one of claims 1-5, wherein generating the scheduling score comprises:
generating the scheduling score based on the availability of the future downlink.

7. The method of any one of claims 1-6, wherein generating the scheduling score is further based the seniority of the task, and wherein a task for which a longer period of time has elapsed since the task was received is prioritized over a task for which a shorter period of time has elapsed since the task was received.

8. The method of any one of claims 1-7, wherein generating the scheduling score comprises:

generating, for each opportunity, an initial score; and
generating, for each opportunity, the scheduling score by optimizing each initial score based on one or more optimization constraints.

9. The method of claim 8, wherein the one or more optimization constraints include one or more of the following constraints:

a given satellite cannot spend more than a maximum amount of time performing any task assigned to the satellite;
a given satellite cannot spend, during a complete orbit of the satellite, more than a maximum amount of time performing one or more tasks assigned to the satellite; and
a given task cannot be assigned to more than one satellite.

10. The method of any one of claims 1-9, wherein identifying the one or more opportunities comprises:

identifying one or more initial opportunities; and
filtering the one or more initial opportunities based on one or more requirements, wherein the one or more requirements include a requirement that an opportunity cannot be identified for a satellite that is scheduled to perform a task within a preset time window running from a current point in time to a future point in time.

11. The method of any one of claims 1-10, wherein each satellite is a synthetic aperture radar (SAR) satellite.

12. The method of any one of claims 1-11, further comprising:

receiving a further task during one or more of steps (a), (b), and (c); and
preventing the further task from being included in steps (a), (b), and (c).

13. The method of any one of claims 1-12, further comprising, prior to receiving the one or more tasks:

for each task in a set of tasks, determining whether the task is locked; and
if the task is locked, preventing the task from being included in steps (a), (b), and (c),
wherein determining whether the task is locked comprises determining whether the task is scheduled to be executed within a preset time window running from a current point in time to a future point in time.

14. The method of any one of claims 1-13, wherein:

the method further comprises, prior to identifying the one or more opportunities:

for at least one task of the one or more tasks, generating one or more updated opportunities, each updated opportunity corresponding to a satellite from the network of satellites potentially performing the task; and
storing each updated opportunity in an opportunity cache;

and identifying the one or more opportunities comprises extracting at least one updated opportunity from the opportunity cache.

15. The method of any one of claims 1-14, wherein generating the scheduling score comprises using linear programming by formulating the one or more task constraints as linear constraints.

16. A system comprising:

a network of satellites;
one or more ground stations; and
a computer-implemented scheduling device configured to:

receive one or more tasks;
for each task:

identify one or more opportunities, wherein each opportunity corresponds to a satellite from the network of satellites potentially performing the task; and
generate, for each opportunity, a scheduling score based on one or more task constraints including one or more of the following constraints on the task associated with the opportunity corresponding to

EP 4 415 283 A1

the scheduling score:

a priority assigned to the task;
a duration of time before the satellite corresponding to the opportunity is able to perform the task; and
an availability of a future downlink;

assign, based on each scheduling score, at least one of the one or more tasks to the satellite corresponding to an opportunity identified for the at least one task; and
uplink an instruction to the satellite to which the assigned task has been assigned so as to cause the satellite to perform the assigned task.

**Amended claims in accordance with Rule 137(2) EPC.**

1. A method of assigning tasks to a network of satellites, wherein the method is performed by one or more computer processors and comprises:

receiving tasks;
for each task:

(a) identifying one or more opportunities, wherein each opportunity corresponds to a satellite (102) from the network of satellites potentially performing the task; and
(b) generating, for each opportunity, a scheduling score based on one or more task constraints including one or more of the following constraints on the task associated with the opportunity corresponding to the scheduling score:

a priority assigned to the task;
a duration of time before the satellite (102) corresponding to the opportunity is able to perform the task; and
an availability of a future downlink; and

(c) assigning, based on each scheduling score, at least one of the tasks to the satellite (102) corresponding to an opportunity identified for the at least one task.

2. The method of claim 1, wherein identifying the one or more opportunities comprises:

determining one or more second task constraints relating to the task; and
identifying the one or more opportunities based on the one or more second task constraints,
wherein the one or more second task constraints include one or more of the following constraints:

a duration of the task; and
a point in time by which the task must be completed.

3. The method of claim 2, wherein:

at least one of the received tasks is an image acquisition; and
the one or more second task constraints include one or more of the following further constraints:

an imaging geometry of the image acquisition; and
an area of interest to be imaged.

4. The method of any one of claims 1-3, wherein identifying the one or more opportunities comprises:

determining one or more satellite constraints relating to each satellite (102) of the network of satellites, comprising one or more of:

obtaining a predicted orbit of each satellite (102);
determining one or more imaging geometries relating to at least one imaging instrument of each satellite (102); and

determining one or more parameters relating to a power availability of each satellite (102); and

identifying the one or more opportunities based on the one or more satellite constraints.

5. The method of any one of claims 1-4, wherein the future downlink availability comprises a duration of time between performance of the task and downlinking of data obtained as a result of performance of the task.

6. The method of any one of claims 1-5, wherein generating the scheduling score comprises:
generating the scheduling score based on the availability of the future downlink.

7. The method of any one of claims 1-6, wherein generating the scheduling score is further based the seniority of the task, and wherein a task for which a longer period of time has elapsed since the task was received is prioritized over a task for which a shorter period of time has elapsed since the task was received.

8. The method of any one of claims 1-7, wherein generating the scheduling score comprises:

generating, for each opportunity, an initial score; and
generating, for each opportunity, the scheduling score by optimizing each initial score based on one or more optimization constraints.

9. The method of claim 8, wherein the one or more optimization constraints include one or more of the following constraints:

a given satellite (102) cannot spend more than a maximum amount of time performing any task assigned to the satellite (102);
a given satellite (102) cannot spend, during a complete orbit of the satellite (102), more than a maximum amount of time performing one or more tasks assigned to the satellite (102); and
a given task cannot be assigned to more than one satellite.

10. The method of any one of claims 1-9, wherein identifying the one or more opportunities comprises:

identifying one or more initial opportunities; and
filtering the one or more initial opportunities based on one or more requirements, wherein the one or more requirements include a requirement that an opportunity cannot be identified for a satellite (102) that is scheduled to perform a task within a preset time window running from a current point in time to a future point in time.

11. The method of any one of claims 1-10, wherein each satellite (102) is a synthetic aperture radar (SAR) satellite.

12. The method of any one of claims 1-11, further comprising:

receiving a further task during one or more of steps (a), (b), and (c); and
preventing the further task from being included in steps (a), (b), and (c).

13. The method of any one of claims 1-12, further comprising, prior to receiving the tasks:

for each task in a set of tasks, determining whether the task is locked; and
if the task is locked, preventing the task from being included in steps (a), (b), and (c),
wherein determining whether the task is locked comprises determining whether the task is scheduled to be executed within a preset time window running from a current point in time to a future point in time.

14. The method of any one of claims 1-13, wherein:

the method further comprises, prior to identifying the one or more opportunities:

for at least one task of the tasks, generating one or more updated opportunities, each updated opportunity corresponding to a satellite (102) from the network of satellites potentially performing the task; and
storing each updated opportunity in an opportunity cache;

and identifying the one or more opportunities comprises extracting at least one updated opportunity from the opportunity cache.

15. The method of any one of claims 1-14, wherein generating the scheduling score comprises using linear programming by formulating the one or more task constraints as linear constraints.

16. A system comprising:

a network of satellites;
one or more ground stations (110); and
a computer-implemented scheduling device configured to:

receive tasks;
for each task:

identify one or more opportunities, wherein each opportunity corresponds to a satellite (102) from the network of satellites potentially performing the task; and generate, for each opportunity, a scheduling score based on one or more task constraints including one or more of the following constraints on the task associated with the opportunity corresponding to the scheduling score:

a priority assigned to the task;
a duration of time before the satellite (102) corresponding to the opportunity is able to perform the task; and
an availability of a future downlink;

assign, based on each scheduling score, at least one of the tasks to the satellite (102) corresponding to an opportunity identified for the at least one task; and
uplink an instruction to the satellite (102) to which the assigned task has been assigned so as to cause the satellite (102) to perform the assigned task.

**FIG. 1**

Coverage on Earth of a single satellite path in 24 hours

FIG. 2

**FIG. 3**

2018-May-03 12.58.42

03 May 13h    03 May 14h    03 May 15h    03 May 16h

Coverage on Earth of 18 (or similar) satellite path in 3 hours - (18 sat 3 h)

FIG. 4

FIG. 5

Coverage on Earth of 18 (or similar) satellite path in 24 hours

New order ~602

302~ Schedule calculation module

Satellite data-base ~604

Channel data-base ~606

New schedule ~608

**FIG. 6**

New order ~602

702~ Location

704~ Time constraint

706~ Other acquisition parameters

**FIG. 7**

*302*

Schedule calculation module

Simulation module — *802*

Satellite identifier — *806*

Execution set identifier — *808*

Optimization module — *804*

# FIG. 8A

810 {

**1 sat, 3 days, Tokyo**

| Anx | Area covered | Duration | End | Intersection Area | Length | Look Angle | Pass | Satellite | Sensor |
|---|---|---|---|---|---|---|---|---|---|
| 2018-Mar-21 12:35:55 126 | 100.00% | 10 | 2018-Mar-21 15:45:23 304 | 538.5975266 | 71.73651146 | 14.61405682 | ASCENDING | SAT1 | LEFT |
| 2018-Mar-22 01:07:13 387 | 60.44% | 10 | 2018-Mar-22 01:44:48 865 | 325.5071074 | 71.77465319 | 28.88282264 | DESCENDING | SAT1 | LEFT |

812 {

**18 sat, 3 days, Tokyo**

| Anx | Area covered | Duration | End | Intersection Area | Length | Look Angle | Pass | Satellite | Sensor |
|---|---|---|---|---|---|---|---|---|---|
| 2018-Mar-21 04:51:51 719 | 100.00% | 10 | 2018-Mar-21 05:01:08 872 | 538.5975266 | 71.9710091 | 28.10745154 | ASCENDING | SAT BLOCK1.1.2 | RIGHT |
| 2018-Mar-21 12:35:06 235 | 100.00% | 10 | 2018-Mar-21 12:44:31 142 | 538.5975266 | 72.13999719 | 17.41635605 | ASCENDING | SAT BLOCK1.2.2 | LEFT |
| 2018-Mar-22 01:02:02 195 | 100.00% | 10 | 2018-Mar-22 01:39:27 300 | 538.5975266 | 72.1482228 | 21.86044642 | DESCENDING | SAT BLOCK1.2.2 | LEFT |
| 2018-Mar-20 18:50:34 751 | 100.00% | 10 | 2018-Mar-20 18:59:52 455 | 538.5975266 | 71.99196903 | 24.77364605 | ASCENDING | SAT BLOCK1.3.1 | RIGHT |
| 2018-Mar-23 08:45:16 705 | 100.00% | 10 | 2018-Mar-23 09:22:49 779 | 538.5975266 | 72.00237178 | 23.90022439 | DESCENDING | SAT BLOCK1.3.2 | RIGHT |
| 2018-Mar-21 08:04:24 627 | 100.00% | 10 | 2018-Mar-21 08:39:56 291 | 538.5975266 | 68.97210287 | 26.05651117 | DESCENDING | SAT BLOCK2.1.1 | LEFT |
| 2018-Mar-22 07:22:25 911 | 97.90% | 10 | 2018-Mar-22 07:57:10 526 | 527.3001139 | 68.84656088 | 16.41429236 | DESCENDING | SAT BLOCK2.1.1 | RIGHT |
| 2018-Mar-23 07:27:03 249 | 8.27% | 10 | 2018-Mar-23 08:02:48 316 | 44.55641461 | 68.97019709 | 34.85790584 | DESCENDING | SAT BLOCK2.1.2 | LEFT |
| 2018-Mar-21 15:50:24 730 | 28.18% | 10 | 2018-Mar-21 16:24:41 163 | 151.7990464 | 68.94738041 | 15.41032965 | DESCENDING | SAT BLOCK2.2.1 | LEFT |
| 2018-Mar-21 08:04:24 383 | 100.00% | 10 | 2018-Mar-21 08:15:48 887 | 538.5975266 | 68.95037568 | 19.0414597 | ASCENDING | SAT BLOCK2.2.1 | LEFT |
| 2018-Mar-22 15:08:25 767 | 100.00% | 10 | 2018-Mar-22 15:42:54 194 | 538.5975266 | 68.76267414 | 27.00367841 | DESCENDING | SAT BLOCK2.2.1 | RIGHT |
| 2018-Mar-21 08:09:01 458 | 100.00% | 10 | 2018-Mar-21 08:21:28 529 | 538.5975266 | 68.70824211 | 32.85757276 | ASCENDING | SAT BLOCK2.2.2 | RIGHT |
| 2018-Mar-20 15:45:47 669 | 4.31% | 10 | 2018-Mar-20 16:20:01 142 | 23.21514483 | 68.69908692 | 34.90591326 | DESCENDING | SAT BLOCK2.2.2 | RIGHT |
| 2018-Mar-21 15:50:27 714 | 100.00% | 10 | 2018-Mar-21 16:01:36 097 | 538.5975266 | 68.9693602 | 31.32051391 | ASCENDING | SAT BLOCK2.3.1 | LEFT |
| 2018-Mar-22 15:55:04 889 | 100.00% | 10 | 2018-Mar-22 16:07:14 541 | 538.5975266 | 68.80687266 | 21.78590351 | ASCENDING | SAT BLOCK2.3.2 | RIGHT |

**FIG. 8B**

EP 4 415 283 A1

*604*

Satellite database

| 902 | Orbits |
|---|---|

Available capacity — *912*

Maintenance — *914*

Mandatory management maneuvers — *916*

Failure — *918*

| 904 | Resources |
| 906 | Power |
| 908 | Momentum |
| 910 | Memory |

Previously uploaded schedule — *920*

**FIG. 9**

*606*

Channel database

1002 — Ground station data

1004 — Available passes

1006 — Required booking times

1008 — Pricing

1010 — Available space-to-space communication links

1012 — Available laser downlinks

**FIG. 10**

**FIG. 11**

**FIG. 12**

*1300*

Request ground station availability ~ *1302*

Receive new order ~ *1303*

Recalculate execution sets ~ *1304*

Recalculate schedule ~ *1306*

Update ground station bookings ~ *1308*

Upload new schedule ~ *1310*

Provide delivery parameters to customer ~ *1312*

Execute order ~ *1314*

# FIG. 13

*200*

**FIG. 14**

**FIG. 15**

EP 4 415 283 A1

**FIG. 16**

EP 4 415 283 A1

**FIG. 17**

EP 4 415 283 A1

FIG. 18

Europäisches
Patentamt

European
Patent Office

Office européen
des brevets

# EUROPEAN SEARCH REPORT

Application Number

EP 23 15 5668

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LV MINGSONG ET AL: "Task Allocation for Real-time Earth Observation Service with LEO Satellites", 2022 IEEE REAL-TIME SYSTEMS SYMPOSIUM (RTSS), IEEE, 5 December 2022 (2022-12-05), pages 14-26, XP034258550, DOI: 10.1109/RTSS55097.2022.00012 [retrieved on 2022-12-26] * abstract * * sections I-VII, algorithm 1; figures 1-13 * | 1-16 | INV. H04B7/185 G01S7/00 G01S13/90 |
| X | LAI ZEQI ET AL: "OrbitCast: Exploiting Mega-Constellations for Low-Latency Earth Observation", 2021 IEEE 29TH INTERNATIONAL CONFERENCE ON NETWORK PROTOCOLS (ICNP), IEEE, 1 November 2021 (2021-11-01), pages 1-12, XP034061303, DOI: 10.1109/ICNP52444.2021.9651919 [retrieved on 2021-12-14] * abstract * * sections I-VII, algorithm 1; figures 1-10 * | 1-16 | TECHNICAL FIELDS SEARCHED (IPC) H04B G01S |

The present search report has been drawn up for all claims

| Place of search | Date of completion of the search | Examiner |
|---|---|---|
| The Hague | 28 June 2023 | Nilsson, Martin |

EPO FORM 1503 03.82 (P04C01)